# EUROPEAN PATENT SPECIFICATION

(11) **EP 4 006 253 B1**
(45) Date of publication and mention of the grant of the patent: **24.07.2024**
(21) Application number: 20210164.8
(22) Date of filing: 27.11.2020
(51) Int. Cl.: E04D 13/03, E04D 13/035

(54) **ROOF WINDOW COMPRISING SASH WITH HINGED OUTER WEATHER SHIELD**
DACHFENSTER UMFASSEND EINEN FLÜGEL MIT AUFKLAPPBAREM ÄUSSEREN WETTERSCHUTZSCHILD
FENÊTRE DE TOIT COMPRENANT UN CHÂSSIS AVEC UNE PROTECTION EXTÉRIEURE ARTICULÉE CONTRE LES INTEMPÉRIES

(43) Date of publication of application: 01.06.2022
(73) Proprietor: VKR Holding A/S, 2970 Hørsholm (DK)
(72) Inventor: KRISTENSEN, Jens Troels Plesner, 2970 Hørsholm (DK); WIIG, Martin Schwartz, 2970 Hørsholm (DK); TWARDAK, Michael, 2970 Hørsholm (DK); BERTRAM, Jacob Uldahl, 2970 Hørsholm (DK); GRØNBORG, Kristian Nitzsch, 2970 Hørsholm (DK); KRISTENSEN, Lars, 2970 Hørsholm (DK); PEDERSEN, Rasmus Klerke, 2970 Hørsholm (DK); ØSTERGAARD, Iben Bjerre, 2970 Hørsholm (DK)
(74) Representative: Høiberg P/S

(56) References cited:
- EP-A1- 2 169 138
- EP-A2- 2 500 488
- EP-B1- 3 396 100
- DE-A1- 2 408 200
- DE-U1- 202019 106 959
- FR-A1- 3 037 383
- PL-B1- 231 540
- US-A- 4 862 657
- US-A1- 2010 269 426

## Description

The present disclosure relates to a roof window for installation in a roof structure of a building and to a building comprising one or more roof windows.

### Background

The focus on providing more energy efficient windows still increases, also within the specific field relating to roof windows, also known as skylights. In order to achieve more energy efficient windows, it is known to provide windows with an improved insulated glass unit. Here the insulated glass unit may comprise multiple heat insulating gaps placed between glass sheets that are arranged parallel to each other. Also, so called "low-e" coatings may be provided in order to obtain an improved energy efficiency. Moreover, it is known to improve energy efficiency of the window by providing a frame and/or sash of the window that provides improved heat insulation by means of e.g. insulating materials such as polystyrene, a fibre insulation, insulated cavities and/or the like. Moreover, the material(s) of the frame construction and sash of the window may be designed in order to provide reduced heat transfer through the frame construction. Patent document EP3396100 B1 discloses a roof window for a flat roof with an exterior top pane placed above an insulated glass unit, and both of these are arranged in a sash. Other roof windows are known from the patent documents EP2169138 A1, US2010/269426 A1 and US4862657 A.

Roof windows, such as roof windows arranged in inclining roofs with a more steep roof pitch, also may induce issues with respect to cleaning options when pane surfaces needs to be cleaned.

The present disclosure relates to a roof window/skylight where the sash can be opened and closed, and where the roof window provides good energy efficiency, may be considered cost efficient when compared to the enhanced energy performance and where also cleaning options are improved. Additionally, the present disclosure may help to provide a solution where daylight delivery is improved and/or where lifetime of the roof window may be improved.

### Summary

The present disclosure relates to a roof window for installation in a roof structure of a building according to claim 1.

The roof window comprises a sash and a fixation frame, wherein the sash is connected to the fixation frame by means of a first hinge arrangement allowing the sash to be moved relative to the fixation frame between a closed sash position and an open sash position.

The sash comprises side members, a top member and a bottom member which together encircles a sash opening. An insulated glass unit is installed in and connected to the sash, and the insulated glass unit comprises multiple glass sheets and a sealed inert gas or vacuum in an insulating space between the glass sheets. The insulated glass unit comprises an inwardly facing major surface for facing the interior of the building and an outwardly facing major surface for facing away from interior of the building.

Moreover an outer weather shield, which is transparent to at least visible light and comprises an interior major surface and an exterior major surface, is connected to the sash, wherein the outer weather shield is configured to cover the sash opening and wherein an air gap is provided between the interior major surface of the weather shield and the outwardly facing major surface of the insulated glass unit. The outer weather shield is connected to the sash so as to move together with the sash and the insulated glass unit when the sash is moved between the closed sash position and the open sash position. The weather shield is movably connected to the sash by means of a further hinge arrangement allowing the weather shield to be moved relative to the sash and the insulated glass unit between a closed weather shield position and an open weather shield position.

This provides that the outer weather shield may be operated/moved relative to the insulated glass unit, e.g. to enable more easy access to the air gap from the exterior side of the roof window. This may enable access to the interior major surface of the weather shield and/or access to the outwardly facing major surface of the insulated glass unit, and thereby enables an easier cleaning of these major surfaces that faces the gap. Additionally, it may in further aspects of the present disclosure enable access to devices or constructions arranged in the air gap between the insulated glass unit (IGU) and the weather shield and/or access to devices or constructions accessible by means of the area of the air gap.

Also, in the closed position, the weather shield covers and may preferably provide a substantially closed air gap, and hence acts as a shield from rain, snow, leafs, dust and/or other undesired objects or liquids. Hence the weather shield prevents water and undesired objects from entering the air gap and from lying on/striking the outer major surface of the insulated glass unit. The air gap additionally provides a roof window with improved heat insulating capabilities.

Experiments indicates that IGU units with many sheets may have a shorter lifetime. The air gap and sash design may help to provide substantially the same or even a better heat insulation with fewer glass sheets (and insulating gaps) of the IGU and consequently may help to provide a better IGU lifetime.

Moreover, the present disclosure may provide a roof window with improved heat insulating properties/energy performance and which is cost efficient when compared to the enhanced energy performance.

The sash may also comprise sidewalls that provides inwardly facing surfaces which faces and encloses the air gap. Hence the air gap is enclosed by the inwardly facing surfaces of the sash walls and the weather shield and the insulated glass unit.

The weather shield may in embodiments of the present disclosure not comprise a low-e coating whereas the insulated glass unit may comprise one or more low-e coatings. In other embodiments, the weather shield may also comprise a low-e coating.

In one or more aspects of the present disclosure, the distance between the interior major surface of the weather shield and the outwardly facing major surface of the insulated glass unit, when the weather shield is in the closed weather shield position, may be at least 3 cm, such as at least 5 cm, such as at least 10 cm. This distance is preferably defined perpendicular to one or both major surfaces. Additionally or alternatively, in one or more aspects of the present disclosure, the distance between the interior major surface of the weather shield and the outwardly facing major surface of the insulated glass unit, when the weather shield is in closed position, is no more than 80 cm, such as no more than 50 cm, such as at no more than 30 cm, e.g. no more than 20 cm. This distance is preferably defined perpendicular to one or both major surfaces.

Such an air gap enclosed in the sash between the outer weather shield and the insulated glass unit in the sash may provide improved heat insulating capabilities and may also in certain embodiments provide more room for equipment such as e.g. blinds or the like in the air gap, and this equipment is hence also protected in the air gap.

In one or more aspects of the present disclosure, the sash is a top hung sash configured to open in a direction away from the interior of the building when installed in the building.

Such top hung sashes may e.g. provide advantages with respect to handling of rain and/or other water such as dew.

In one or more aspects of the present disclosure, the first hinge arrangement and further hinge arrangement are arranged at the top part of the window.

Hence, both the sash and the outer weather shield may be top hinged solutions. This may e.g. be advantageous in order to provide a less complex solution and/or in order to provide improvements in relation to water tightness which may especially be an issue in roof window solutions. However, in other aspects of the present disclosure, the further hinge arrangement may be arranged at one of the sides of the sash or even at the bottom of the sash.

In one or more aspects of the present disclosure, the outer weather shield may be slidably moveable between the open weather shield position and the closed weather shield position.

In one or more aspects of the present disclosure, the weather shield may be moveable between the open weather shield position and the closed weather shield position while kept substantially parallel to the outer surfaces of the insulated glass unit.

In one or more aspects of the present disclosure, the movement of the outer weather shield between the open weather shield position and the closed weather shield position may include both a pivoting movement of the weather shield around a rotation axis as well as displacement of this axis around which the weather shield is displaced. Hence, here, the further hinge arrangement may comprise one or more hinges for providing such a motion of the outer weather shield.

It may however be preferred that the movement of the outer weather shield between the open weather shield position and the closed weather shield position may include alone a pivoting movement of the weather shield around a rotation axis.

In one or more aspects of the present disclosure, the weather shield comprises a single layer glass unit such as a laminated or un-laminated single layer glass unit.

Additionally or alternatively, in embodiments of the present disclosure, the insulated glass unit may comprise a laminated glass with/providing the inwardly facing major surface of the insulated glass unit.

This may provide a more cost efficient roof window, yet with a good heat insulating capability due to the air gap and the relatively large distance between the outer weather shield and the insulating glass unit. Laminated glass provide improved acoustics and security and may prevent "fall through" accidents.

The insulated glass unit may however also in other aspects of the present disclosure be a triple (or more) insulated glass unit, i.e. an insulated glass unit with two outer panes and at least one inner pane, and where an insulating cavity is placed between the inner pane and a first of the outer panes, and wherein a further insulating cavity is placed between the inner pane and the other outer pane.

It is generally understood that the insulated glass unit may preferably be laminated (by means of an interlayer and a lamination glass sheet/pane), such as at the interior surface, and in that case, the lamination pane may comprise the inwardly facing major surface for facing the interior of the building.

Naturally, it is generally understood that the outer surfaces of the insulated glass unit and/or the weather shield may be coated with one or more coating layers, and in that case, the outermost layer provides the outer surface of the respective glass pane/glass sheet.

In other aspects of the present disclosure, the weather shield may be an insulated unit such as an insulated double layer unit with two glass units and an airgap (or evacuated gap) there between.

In one or more aspects of the present disclosure, the further hinge arrangement comprises one or more pivot hinge connections.

In one or more aspects of the present disclosure, the weather shield may in the closed weather shield position be arranged substantially parallel to the outwardly facing major surface of the insulated glass unit.

This may provide aesthetic advantages and/or help to reduce optical disturbances. Also the glass sheets, including the outer weather shield, can hereby be substantially parallel to the roof surface and the weather shield can better deal with snow, ice and rain.

In one or more aspects of the present disclosure, the outer weather shield may in the open weather shield position be configured to be arranged with an angle, such as at least an acute angle, to the outwardly facing major surface of the insulated glass unit (4).

This may e.g. be achieved by means of a pivot hinge arrangement and provide a simple mechanical solution that may provide good access to the air gap/space in the sash. This may e.g. provide a relatively simple mechanical solution.

In one or more aspects of the present disclosure, a holding arrangement of the roof window may be configured to maintain the weather shield in the open weather shield position until a user manipulates the holding arrangement and/or the weather shield in order to move the weather shield back to the closed weather shield position. Additionally or alternatively, in one or more aspects of the present disclosure, the roof window comprises a lifting mechanism connected to the sash and the outer weather shield, wherein the lifting mechanism is configured to induce a lifting force on the weather shield.

This may e.g. provide a more user friendly and/or safe solution.

The holding arrangement may e.g. comprise a spring loaded holding arrangement, it may comprise a rod connected to the sash and configured to be displaced to a holding position to hold the weather shield, it may comprise stop parts arranged at a part of the further hinge arrangement and configured to hold and maintain the weather shield in the open position and or the like.

The lifting mechanism may e.g. comprise a spring arrangement, a linear gas cylinder and/or the like. In one or more aspects of the present disclosure, the lifting mechanism may also comprise or provide the holding arrangement.

The lifting mechanism provides a more safe solution and/or a more user friendly solution

The lifting mechanism is configured to provide the lifting force to move, or to help moving, the weather shield from the closed weather shield position to the open weather shield position.

In one or more aspects of the present disclosure, the roof window comprises one or more releasable locking mechanisms for locking the outer weather shield in the closed weather shield position. This may e.g. comprise a locking mechanism arranged at the corner areas of the weather shield or at another relevant location.

The locking mechanism assures that the weather shield is maintained in the closed weather shield position when intended, and is not accidentally opened by e.g. wind.

In one or more aspects of the present disclosure, a resilient water seal is arranged between the sash and the weather shield, and wherein the resilient water seal provides a substantially water tight seal between the sash and the weather shield when the weather shield is arranged in the closed weather shield position.

This may help to provide improved water tightness. The resilient water seal may be compressed by the weather shield in the closed position.

In one or more aspects of the present disclosure, the roof window may be configured to be installed in a roof structure with a roof arranged with a roof pitch which is larger than 17°, such as larger than 25°, for example larger than 35° relative to horizontal.

The roof window may e.g. be configured to be installed in a roof structure with a roof arranged with a roof pitch which is between 17° and 90°, such as between 17° and 85°. Here the fixation frame may be attached to the roof structure by means of installation hardware such as brackets and/or the like.

Especially inclining roofs with roof pitch which is larger than 17°, such as larger than 25° may provide certain challenges with respect to water tightness of the roof window. But also, there may be challenges with respect to safety and user friendliness when e.g. cleaning the window of the type according to the present disclosure, as the interior major surfaces of the weather shield and the insulated glass unit that faces the air gap of the sash may occasionally need cleaning.

The present disclosure provides a solution which may be more safe as the weather shield may be maintained attached to the sash during the cleaning of these major surfaces when the window is arranged in roofs with a larger roof pitch, as opposed to e.g. roof/skylight windows for flat roofs.

In one or more aspects of the present disclosure, the weather shield may overlap and cover the sash at two or more of the top, bottom and sides of the sash, and wherein the exterior major surface of the weather shield, at the part or parts of the weather shield that overlaps the sash, is exposed.

This may be advantageous with respect to providing a more simple mechanical solution that may ensure water tightness, for example for use in e.g. inclining roof windows. Additionally, it may help to provide a "glass to edge" appearance, and hence provide advantageous aesthetic appearances.

In one or more aspects of the present disclosure, the outer weather shield may be connected directly or indirectly to the further hinge arrangement by means of a bond such as an adhesive bond. The bond may e.g. comprise structural adhesive such as a silicone adhesive, a polymer encapsulation and/or or another suitable adhesive. This may provide a safe solution that also provides aesthetic advantages and e.g. allows exposed outer surfaces of the weather shield above the sash and fixation frame.

In one or more aspects of the present disclosure, the fixation frame comprises top, bottom and side frame members defining a frame opening, and wherein the outer weather shield overlaps at least said side frame members and preferably also at least the bottom frame member.

In one or more aspects of the present disclosure, one or more outer edges of the weather shield, such as at least two, preferably at least three, outer edges of the weather shield are substantially flush with or extends out over an outermost side surface of the fixation frame which faces away from the frame opening.

The sash may preferably be movable into and out of the frame opening.

In one or more aspects of the present disclosure, the length and/or the width of the weather shield is larger than the length and/or width of the sash opening. In certain aspects of the present disclosure, the length and width of the weather shield is larger than the length and width of the sash opening.

In one or more aspects of the present disclosure, the outer perimeter of the weather shield itself is substantially equal to, or larger than, the maximum outer perimeter described by the sash.

In one or more aspects of the present disclosure, at least 80% such as at least 90%, for example at least 95%, such as at least 99% of the entire outer major surface of the weather shield is exposed.

In one or more aspects of the present disclosure, the outer weather shield may have/comprise an exposed outer surface area which is at least 90%, such as at least 95%, such as at least 99% of the area described by the outer side periphery of the roof window.

In one or more aspects of the present disclosure, at least the width of the weather shield is substantially equal to or larger than the maximum width of the fixation frame.

In one or more aspects of the present disclosure, the weather shield covers the substantially entire fixation frame and the entire sash wherein the outer/exterior major surface of the weather shield defines/provides substantially the entire outwardly facing top surface of the roof window.

In one or more aspects of the present disclosure, the outer perimeter of the weather shield itself is substantially equal to or larger than the maximum outer perimeter described by the fixation frame.

In one or more aspects of the present disclosure, at least the width of the weather shield is substantially equal to or larger than the maximum width of the fixation frame.

In one or more aspects of the present disclosure, the major surfaces of the weather shield has a larger surface area than the major surfaces of the insulated glass unit. This may allow for the weather shield to cover a larger area than the insulated glass unit is able to cover and e.g. to also extend out over/overlap the fixation frame. Also it may help to enable a "glass to edge" solution.

In one or more aspects of the present disclosure, lower parts of the fixation frame overlaps and visually covers a part of the interior major surface of the insulated glass unit when the sash is in the closed sash position. Here, said lower parts of the fixation frame preferably extends through a plane defined by an inwardly facing surface of a sash wall of the sash which faces and encloses the air gap.

The inwardly facing surface of the sash wall providing said plane may preferably in combination with the major surfaces of the weather shield and the insulated glass unit enclose the air gap in the sash.

This helps to move the interior/ inwardly facing surface of the sash which faces the air gap in the sash towards the frame and away from the line of sight through the window. This may help to provide that the sash is more visually hidden when the sash is closed, and/or may provide that that more light may pass through the window to the interior of the building thereby providing improved daylight delivery.

The plane through which the lower parts of the fixation frame extends is preferably arranged opposite to a side edge of the insulated glass unit.

The lower parts of the fixation frame may preferably extend from the frame side and with a distance of at least 2 cm, such as at least 3 cm, e.g. at least 5 cm in over plane.

In one or more aspects of the present disclosure, said lower parts of the fixation frame encloses and defines the minimum frame opening of the roof window through which light can pass when the sash is in the closed position.

This provides that the sash construction may be substantially hidden when the sash is in the closed sash position. And the daylight area is maximized. Daylight is the main purpose of a window, so window enhancement may be considered as maximizing daylight input and preferably also minimizing the heat loss.

A seal such as an air seal may in aspects of the present disclosure be arranged between a surface of the part of the fixation frame that overlaps and visually covers the lower inwardly facing surface of the sash, and the visually covered inwardly facing surfaces of the sash

A seal such as an air seal may additionally or alternatively, in aspects of the present disclosure, be arranged to abut the interior major surface of the insulated glass unit and be arranged between the insulated glass unit and a surface of the lower part of the fixation frame facing the insulated glass unit when the sash is in the closed sash position.

In the present disclosure, the exterior of the fixation frame defines an exterior frame plane defined by the outermost surfaces of the fixation frame, and wherein the exterior frame plane extends across and over the frame opening which is encircled by frame members of the frame. At least a part of the insulated glass unit is configured to move from a position above the exterior frame plane and into the frame opening when the sash is moved from the open to the closed sash position, so that the outwardly facing major surface of the insulated glass unit is placed in the frame opening below the exterior frame plane with a distance of preferably at least 3 cm to the exterior frame plane when the sash is in the closed sash position, such as with a distance of at least, 7 cm, such as at least 12 cm to the exterior frame plane. This may e.g. help to provide enhanced heat insulating capabilities and/or aesthetic advantages.

In one or more aspects of the present disclosure, the distance from the outwardly facing major surface of the insulated glass unit and to the exterior frame plane may be larger than the insulated glass unit 4 thickness. Insulated glass unit thickness may in aspects be between 17 mm and 60 mm, such as between 20-50mm depending on whether its a double or triple glazing.

In one or more aspects of the present disclosure, the weather shield may be maintained at a position above said frame opening and above the exterior frame plane when the sash is in the closed sash position.

This may e.g. enable providing a window with an increased exposed surface area.

In one or more aspects of the present disclosure, the outer weather shield may be maintained at a position above the frame opening and above the exterior frame plane when the sash is in the closed sash position and when the weather shield is in the closed weather shield position, and with a distance between the interior surface of the weather shield and the exterior frame plane which is less than the distance between the outwardly facing major surface (4b) of the insulated glass unit and the exterior frame plane. For example, in one or more aspects of the present disclosure, said distance between the interior surface of the weather shield and the exterior frame plane may be less than half, such as less than 1/4, or less than 1/8 of the distance between the outwardly facing major surface of the insulated glass unit and the exterior frame plane.

In one or more aspects of the present disclosure, the interior surface, and possibly also the exterior surface, of the insulated glass unit, when the sash is closed, may be configured to be located below a plane defined by outer surfaces the roof structure such as roof rafters and/or the roof battens.

In one or more aspects of the present disclosure, the interior and exterior major surfaces of the outer weather shield are plane. Additionally or alternatively, the outer weather shield comprises one or more plane sheets of glass such as one or more plane sheets of annealed or tempered glass. This may e.g. help to provide a more safe solution. For example, the weather shield may in aspects comprise be a single tempered sheet, which in further aspects may be laminated.

In one or more aspects of the present disclosure, the first hinge arrangement may provide an axis of rotation for the sash around which the sash is configured to rotate between the open sash position and the closed sash position. said axis of rotation my be configured to be coinciding with a rotation plane located opposite to and parallel to the outwardly facing surface of the insulated glass unit when the sash is in the closed sash position.

The distance between the rotation plane and an exterior frame plane P1 defined by the outermost surfaces of the fixation frame which extends across and over the frame opening provided by the fixation frame may in aspects be smaller than the distance between the outwardly facing surface of the insulated glass unit and the rotation plane.

In one or more aspects of the present disclosure, the roof window may comprise a first and a second of said sash arranged in the fixation frame. Here, both of the first and second sashes are in the closed sash positions configured to support against a shared elongated frame part of the fixation frame, where the shared elongated frame part comprises parts that overlaps an elongated right sash member of a first of the sashes and moreover overlap an elongated left sash member of the other sash, at least when the sashes are both placed in the closed sash position.

For example, in one or more aspects of the present disclosure, the roof window comprises a first and a second of said sash arranged in the fixation frame, wherein each of the first and second sash comprises an insulated glass unit and an outer weather shield connected to the respective sash so as to move together with the respective sash and the insulated glass unit when the sash is moved between the closed sash position and the open sash position. Here, each of the weather shields are movably connected to the respective sash by means of the further hinge arrangement allowing each weather shield to be moved relative to the respective sash and the insulated glass unit between the closed weather shield position and the open weather shield position. Both of the first and second sashes are in the closed sash positions configured to support against a shared elongated frame part of the fixation frame, where the shared elongated frame part comprises parts that overlaps an elongated right sash member of a first of the sashes and moreover overlap an elongated left sash member of the other sash, at least when the sashes are both placed in the closed sash position.

It is understood that the sash may e.g. be configured to support against the shared elongated frame part of the fixation frame by providing that a sash profile support against the shared elongated frame part, and/or by providing that a major surface of the insulated glass unit supports against the shared elongated frame part. A gasket may here in further aspects be placed between the sash and the shared elongated frame part.

It is understood that the shared elongated frame part may preferably extend in a longitudinal direction which is substantially parallel to longitudinal directions in which the overlapped right and left sash members extends.

By the above solution where the roof window comprises two sashes, synergy cleaning options may be enhanced as a first of the sashes may be placed in the open sash position and the weather shield of the other, second sash may be placed in the open weather shield position wile the same sash is e.g. placed in the closed sash position. Hence, access to the surfaces of the weather shield and the insulated glass unit facing the air gap of the second sash can be accessed by reaching out through the window opening of the first sash. The same may subsequently be applied for the first sash by switching opening positions of the two sashes and weather shields. Here it may be preferred that the weather shields and the sashes are hinged by means of the respective further arrangements so that the air gaps in the respective sashes can be accessed through the neighbouring window opening, e.g. by being side hinged or preferably top hinged.

In one or more aspects of the present disclosure, the overlapping parts of the shared elongated frame part may be configured to overlap and visually cover a part of the interior major surface of the insulated glass units when the sashes are in the closed sash position. Additionally or alternatively, the shared elongated frame part may comprises parts that extend through planes defined by oppositely directed surfaces of sash walls of the sashes, where said oppositely directed surfaces faces and encloses a part of said air gaps between the insulated glass unit and the weather shied of the respective sashes.

In one or more aspects of the present disclosure, opposing edges of the outer weather shields may overlap the shared elongated frame part, and where a distance is provided between the opposing edges, such as wherein said distance is less than 10 cm, such as less than 5 cm, e.g. less than 3 cm and is determined perpendicular to the opposing edge surfaces.

It is understood that the weather shields of the window comprising two sashes together may cover side bottom and possibly also top parts of the sash and/or frame as previously described. For example, the weather shields may here in one or more aspects of the present disclosure together comprise an exposed outer major surface area which is at least 90%, such as at least 95%, such as at least 99% of the area described by the outer side periphery of the roof window.

The shared elongated frame part preferably provide side edges which abuts and encloses a part of each two separate minimum frame openings, where each frame opening is configured to be covered by each their insulated glass unit of the sashes of the roof window when these sashes are in the closed sash position.

In preferred aspects, the exterior major surfaces of the outer weather shields, when the sashes and weather shields are all in the closed positions, are substantially flush.

A drain channel may in aspects of the present disclosure be arranged underneath the space between the edges in order to guide water away from the window. This drain channel may be provided by an U-shaped profile or the like.

The roof window may in one or more aspects of the present disclosure be configured to be installed in one or more predefined positions that provides various predefined installation depths of the roof window. In at least one of the predefined positions at least the interior surface, and possibly also the outwardly facing surface of the insulated glass unit may be configured to be located below a plane defined by an installation hardware support surface e.g. provided by an outer rafter or battens surface of the roof structure. The insulated glass unit may hence be "countersunk" into the roof structure when the sash is closed. This may provide enhanced heat insulating properties.

The present disclosure moreover relates to a building comprising a roof with a roofing, and wherein the roofing is arranged with a roof pitch which is larger than 17°, such as larger than 25° relative to horizontal, wherein one or more roof windows according to any of the claims and/or any of the above disclosed aspects is/are arranged in said roof, preferably so that the outer weather shield(s) in the closed weather shield position is/are substantially parallel to a roof plane defined by the roofing of the roof structure and/or by the roof structure.

### Figures

Aspects of the present disclosure will be described in the following with reference to the figures in which:
- fig. 1 :: illustrates a roof window according to embodiments of the present disclosure,
- fig. 2a-2c: : illustrates a roof window according to embodiments of the present disclosure comprising an outer weather shield and an insulated glass unit,
- fig. 3a-3c: : illustrates a roof window according to embodiments of the present disclosure seen from the exterior side and interior side respectively,
- figs. 4a-4b: : illustrates a roof window according to embodiments of the present disclosure where the roof window comprises a first and a second sash arranged in a fixation frame,
- figs. 5a-5b: : illustrates a roof window according to embodiments of the present disclosure where the roof window comprises a holding mechanism,
- figs. 6a-6c: : illustrates a roof window according to embodiments of the present disclosure where the roof window sash and a weather shield are both top hinged,
- figs. 7a-7c: : illustrates a roof window according to different embodiments of the present disclosure where a weather shield is arranged to open in different directions,
- figs. 8a-8b: : illustrates a further opening solution for a weather shield according to embodiments of the present disclosure,
- fig. 9: : illustrates a roof window comprising locking mechanisms, and
- fig. 10: : illustrates an image of a roof window according to embodiments of the present disclosure as e.g. also seen in figs 4a-4b.

### Detailed description

In relation to the figures described below, where the present disclosure may be described with reference to various embodiments, without limiting the same, it is to be understood that the disclosed embodiments are merely illustrative of the present disclosure that may be embodied in various and alternative forms provided that they fall within the scope of claim 1. The figures are schematic and not to scale; some features may be exaggerated or minimized to show details of particular components. Therefore, specific structural and functional details disclosed herein are not to be interpreted as limiting, but merely as a representative basis for e.g. teaching one skilled in the art to variously employ the present disclosure.

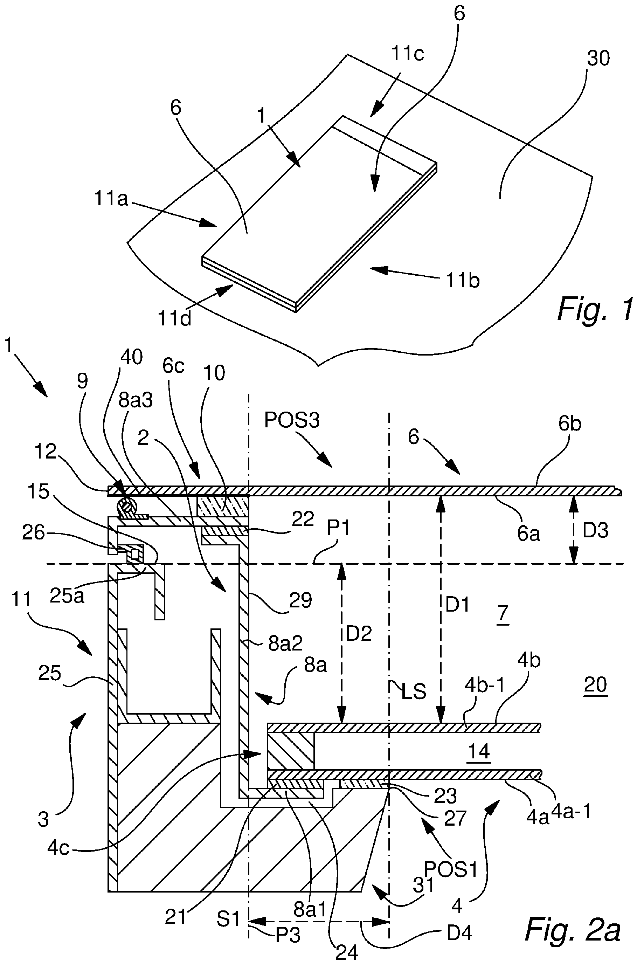

Fig. 1 illustrates a roof window 1 installed in a roof structure with an outer roofing 30 of a building, according to embodiments of the present disclosure.

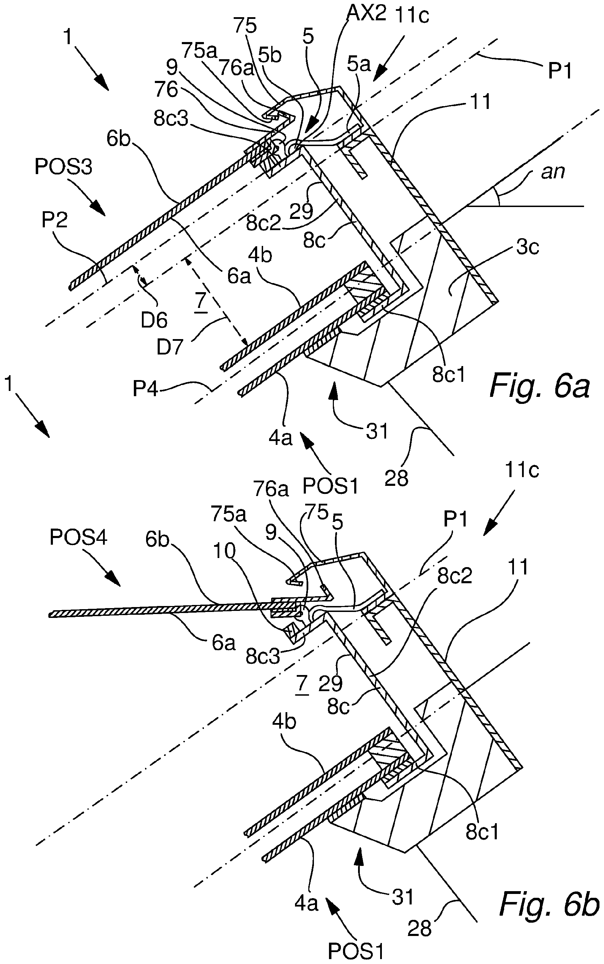

The roofing 30 is preferably arranged with a roof pitch, which is larger than 17°, such as larger than 25°, for example larger than 35° compared to horizontal. For example, the roof pitch may be between 17° and 90°, such as between 17° and 85° (see also fig. 6a). As will be described in more details below, the woof window 1 comprises an outer weather shield 6, which is transparent to at least visible light and comprises an interior major surface (6a) and an exposed, exterior, major surface 6b.

The roof window comprises side areas 1 1a, 11b, a top area 11c and a bottom area 11d.

The window comprises a movable sash and a fixation frame (described in more details below) and the sash is in embodiments of the present disclosure top hinged so that the bottom part of the sash opens outwards and away from the interior of the building when the sash is opened.

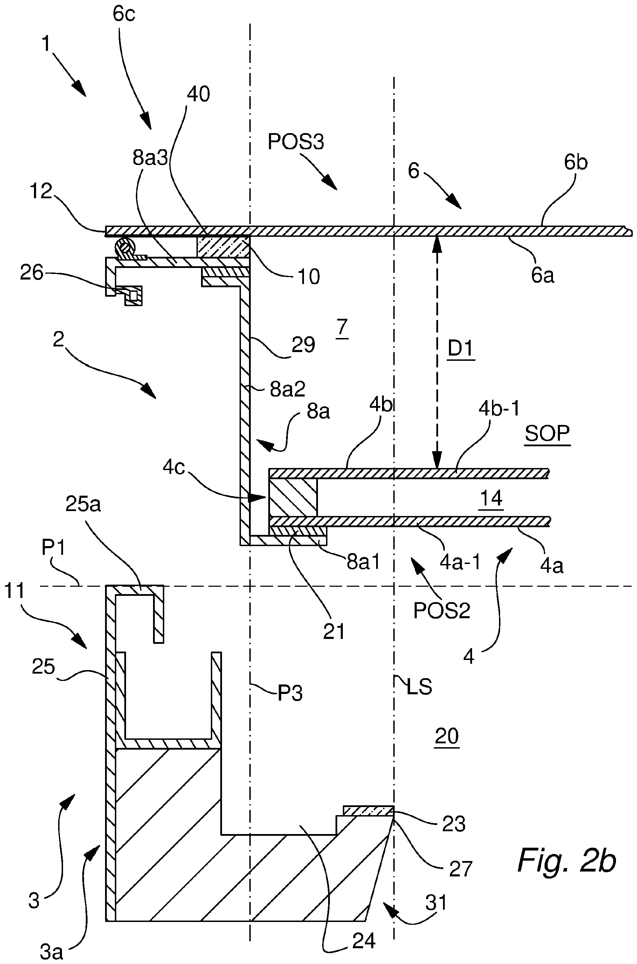

Fig 2a-2c illustrates schematically a cross sectional view of a roof window according to embodiments of the present disclosure. The roof window 1 comprises a sash 2 and a frame 3. The sash 2 is connected to the fixation frame 3 by means of a first hinge arrangement (not illustrated in fig. 2a-2c see e.g. figs 6a-6c) which allows the sash to be moved relative to the fixation frame between a closed sash position POS1 and an open sash position POS2 as illustrated in figs 2a and 2b respectively.

The sash 2 comprises side members, a top member and a bottom member which together encircles a sash opening SOP, and an insulated glass unit 4 is installed in and connected to the sash 2. The insulated glass unit 4 comprises an inwardly facing major surface 4a for facing the interior of the building and an outwardly facing major surface 4b for facing away from interior of the building. The insulated glass unit 4 in figs. 2a-2c comprises a single insulating space 14 enclosed by two parallel glass sheets50a, 50b 4a-1, 4b-1. The insulated glass unit may also in further embodiments (not illustrated) be a triple (or more) insulated glass unit, i.e. an insulated glass unit with two outer panes and at least one inner pane, and where an insulating cavity is placed between the inner pane and a first of the outer panes, and wherein a further insulating cavity is placed between the inner pane and the other outer pane.

It is generally understood that the insulated glass unit may preferably be laminated (not illustrated) by means of an interlayer and a lamination glass sheet/pane, such as at the interior surface, and in that case, the lamination pane may comprise the inwardly facing major surface 4a for facing the interior of the building.

The sash 2 moreover comprises the outer weather shield 6, which is transparent to at least visible light and comprises an interior major surface 6a and an exterior major surface 6b. The outer weather shield is configured to cover the sash opening and an air gap 7 is provided between the interior major surface 6a of the weather shield 6 and the outwardly facing major surface 4b of the insulated glass unit 4. An inner sash wall 8a encloses the air gap 7, and hence the air gap is enclosed by the insulated glass unit 4, the outer weather shield 6 and top, and side, top and bottom members of the sash 8a-8d. light can pass through the air gap/air space 7 from the outside to the inside. One or more of the panes of the insulated glass unit 4 and/or the weather shield 6 may in embodiments of the present disclosure comprise one or more low-e or solar control coatings. The weather shield may in embodiments of the present disclosure not comprise a low-e coating whereas the insulated glass unit may comprise one or more low-e coatings. The insulated glass unit 4 may be of the type with an inert gas filled, heat insulating sealed space 14, or it may be a vacuum insulated glass unit.

The weather shield 6 may comprise a single layer glass unit such as a laminated or un-laminated single layer glass unit. In other aspects of the present disclosure, the weather shield may be an insulated unit such as an insulated glass unit as e.g. described above. The weather shield may in embodiments of the present disclosure comprise one or more tempered glass sheets such as a thermally tempered glass sheet(s).

As can be seen from e.g. fig. 2a, the outer weather shield 6 is connected to the sash 2 so as to move together with the sash 2, and the insulated glass unit 4 when the sash 2 is moved between the closed sash position POS 1 and the open sash position POS2.

Moreover, the weather shield 6 is furthermore movably connected to the sash 2. This is provided by means of a further hinge arrangement 9 allowing the weather shield 6 to be moved relative to the sash 2 and the insulated glass unit 4 between a closed weather shield position POS3 and an open weather shield position POS4.

When the outer weather shield 6, also referred to as "weather shield" in the present disclosure, is in the closed weather shield position POS3 as illustrated in figs. 2a and 2b, the air gap in the sash 7 is substantially sealed/closed and enclosed by the weather shield, the insulated glass unit and the sash, thereby creating a heat insulating air space in the sash 2. In embodiments the air gap 7 may be ventilated by one or more conduit to the exterior to allow pressure and condensation to ventilate.

In the contrary, when weather shield is arranged in the open weather shield opposition while supported by the further hinge arrangement 9, access to the air gap 7 is allowed through the thereby provided opening. Hereby the surfaces 4b, 6a may be cleaned and/or access to equipment or parts that are available in or through the air gap is granted.

The distance D1 between the interior major surface 6a of the weather shield 6 and the outwardly facing major surface 4b of the insulated glass unit 4, when the weather shield (6) is in the closed weather shield position POS3, is at least 3 cm, such as at least 5 cm, such as at least 10 cm. This distance D1 is defined perpendicular to at least one of said major surfaces 4b, 6a and in the present example of figs. 2a and 2b, perpendicular to both surfaces. The distance D1 may in further embodiments be no more than 80 cm, such as no more than 50 cm, such as at no more than 30 cm.

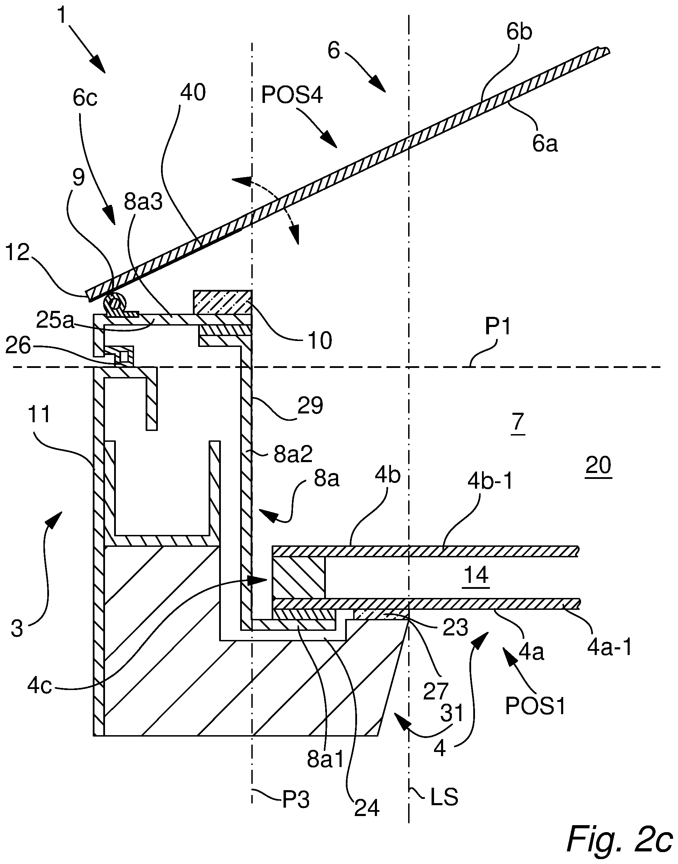

As can be seen from e.g. fig. 2c, the further hinge arrangement 9 may comprise a pivot hinge arrangement.

In embodiments of the present disclosure, the first hinge arrangement and further hinge arrangement 9 may be arranged at the top of the window so that both the sash 2 and the outer weather shield 6 are top hinged (see e.g. figs 6a-6b). In figs. 2a-2c, the outer weather shield 6 is not illustrated as being top hinged but instead hinged at one of the sides of the roof window.

As can be seen in fig. 2a, the weather shield 6 may be maintained at a position above the frame opening 20 and above an exterior frame plane P1 when the sash 2 is in the closed sash position POS1, and with a distance D3 between the interior surface 6a of the weather shield and the exterior frame plane P1. The exterior frame plane P1 extends across and over the frame opening 20 which is encircled by top, bottom and side members of the fixation frame when the sash 2 is in the closed position.

The distance D2 is defined between the exterior frame plane P1 and the outwardly facing major surface 4b of the insulated glass unit. The distance D2 may provide the effect that the insulated glass unit 4 is below the exterior frame plane P1 even though the sash 8 opens outwards.

The distance D3 is less than the distance D2 between the outwardly facing major surface 4b of the insulated glass unit 4 and the exterior frame plane P1.

As seen in figs. 2a-2c, the exterior frame plane P1 is defined by exterior outer hard frame surfaces 15 of the frame, where the surfaces 15 faces the weather shield in the closed weather shield position (excluding any resilient gaskets), and the plane P1 may preferably be parallel to the surfaces 4a, 4b of the insulated glass unit 4 when the sash is in the closed position.

In embodiments of the present disclosure, the distance D3 between the interior surface 6a of the weather shield and the exterior frame plane P1 is less than half, such as less than 1/4, or less than 1/8 of the distance D2 between the outwardly facing major surface 4b of the insulated glass unit 4 and the exterior frame plane P1 when the sash and the weather shields are both in the closed positions POS1, POS3.

However, at least a part of the insulated glass unit 4 is configured to move from a position above the exterior frame plane P1 and into the frame opening 20 when the sash is moved from the open POS2 to the closed POS1 sash position, so that the outwardly facing major surface 4b of the insulated glass unit 4 is placed in the frame opening 20 below the exterior frame plane P1 with a distance D2 to the plane P1. This distance D2 may in certain embodiments be at least 3 cm when the sash is in the closed sash position, such as with a distance D2 of at least, 7 cm, such as at least 12 cm from the exterior frame plane D2. In embodiments the distance D2 is larger than the insulated glass unit 4 thickness. Insulated glass units typically are 20-50mm depending on whether its a double or triple glazing.

As can be seen in the figures 2a-2c, the weather shield is maintained at a position above said frame opening 20 and above the exterior frame plane P1 when the sash is in the closed sash position POS3.

In one or more embodiments of the present disclosure, one or more outer edges 12 of the weather shield 6, such as at least two, preferably at least three, outer edges of the weather shield 6 may be substantially flush with or extend out over an outermost side surface 11 of the fixation frame 3 which faces away from the frame opening. If a protection wall is placed opposite to the outer edge(s)12, this may be flush with or extend out over the outermost side surface 11 of the fixation frame 3

Regarding the construction of the sash, the sash wall 8a (and the other sash walls 8b, 8c, 8d described and/or illustrated in the present disclosure) which comprises wall parts enclosing the air space/gap 7 may be a relatively thin plate shaped and preferably massive/solid wall that may comprise e.g. a polymer material, a fibre material such as glass fibres or carbon fibres, or alternatively a metal or the like. The thickness of the sash wall(s) 8a may be below 7 mm, such as below 4 mm, e.g. below 2 mm. The material of the sash walls may be configured to have a sufficient strength up to at least 90 °C.

The sash wall 8a may as illustrated, in embodiments of the present disclosure, comprise a support part 8a1 extending in under the insulated glass unit and which is attached to the insulated glass unit by means of an adhesive 21. Alternatively, the insulated glass unit may be clamped (not illustrated) between wall parts of the sash wall 8a. Alternatively a separate part may also hold the insulated glass unit and connect it to the sash wall 8a (not illustrated).

The sash wall 8a moreover comprises or is connected to a frame overlapping sash part 8a3 extending in over the outer frame surface 15 of the frame which faces the weather shield.

In fig. 2a-2c, this frame overlapping sash part 8a3 is provided by a wall which is bonded to the sash wall 8a by means of an adhesive 22, but in other embodiments, this frame overlapping sash part 8a3 may he integrated in the sash wall so that the sash wall is a single piece comprising parts 8a1, 8a2 and 8a3. Also in other embodiments one or more sash parts 8a1, 8a2 and 8a3 may be extruded and connected by extruded groove and tongue features.

As can be seen, the sash wall 8a2 extends opposite to the side edge 4c of the insulated glass unit 4 to, between the fixation frame 3 and the said side edge 4c. The sash wall 8aw extends along the fixation frame 3 when the sash is in the closed position POS1.

The fixation frame comprises a covering part 31 that extends in over and overlaps the inner surface 4a of the insulated glass unit 4. When the sash 2 is in the closed position, The sash or the insulated glass unit (as illustrated) presses towards an air seal/gasket 23 such as a resilient rubber or foam seal, which is placed between the covering part 31 and the interior major surface 4a (as illustrated) and/or (not illustrated) the support part 8a1.

The Insulated glass unit hence has a height and/or width which is larger than the minimum height and/or width of the frame aperture, and it may hence in embodiments of the present disclosure be so that it is not the sash 2, but instead the fixation frame 3 which, by means of the overlapping covering part 31, provides the line of sight LS through the window and describes the minimum aperture of the window through which light can pass.

The lower part 31 of the fixation frame hence overlaps and visually covers the inwardly facing surface of the sash wall 8a1 when the sash 2 is in the closed sash position.

In figs 2a-2c, the fixation frame 3 comprises an L shape where the uppermost part provides the plane P1, and the lowermost part is provided by the overlapping covering part 31 of the fixation frame.

As can be seen, the lower part of the fixation frame providing the part 31 may be solid and made from e.g. wood, but in other embodiments of the present disclosure, it may be a hollow part made from a plastic/polymer material such as PVC or the like. In case this part is hollow, it may comprise an insulating air space or an insulation material such as glass wool, mineral wool, polystyrene or the like.

The overlapping part 31 may comprise a groove/recess 24 in the surface facing the insulated glass unit, where the groove is configured to for receiving a part of the support part 8a1 of the sash 2 when the sash is closed POS1.

An outer frame wall element 25, which may be provided by a plate shaped, e.g. solid, material, may provide the outermost side surface 11 of the fixation frame 3. This wall 25 may also comprise/provide the upper surface 15 defining the plane P1. This frame wall element 25 may provide a lip 25a extending along (e.g. parallel to) the plane P1 and in a direction towards the frame opening 20. A resilient gasket part 26 may be arranged to interact with e.g. this lip 25a in order to provide air and/or water tightness. The gasket 26 may be attached to the sash 2 or to the frame 3.

The lower parts 31 of the fixation frame 3 overlaps and visually covers a part of the interior major surface 4a of the insulated glass unit 4 when the sash 2 is in the closed sash position, and moreover, the said lower parts 31 extends through a plane P3 defined by an inwardly facing surface 29 of a sash wall 8a2 of the sash 2 which faces and encloses the air gap 7 when the sash is in the closed position.

The lower parts 31 of the fixation frame may preferably extend from the frame side S1 (S1 is located at the side of the plane P3 furthest away from the minimum frame opening and line of sight) and with a distance D4 of at least 2 cm, such as at least 3 cm, e.g. at least 5 cm in over the plane P3, (distance D4 is determined perpendicular to the plane P3). The distance is defined between the plane P3 and the line of sight plane LS which is defined perpendicular to the insulated glass unit IGU.

As can be seen, the weather shield 6 overlaps the frame 3 and the sash 2, and is larger than the insulated glass unit 4. The weather shield 6 may e.g. provide a "glass-to edge" impression at one or more of the sides, bottom and/or upper areas 11a-1 1d (see fig. 1) from the exterior of the building.

The Insulated glass unit 4 is moreover larger than the minimum frame opening 20a defined by the fixation frame 3, which frame opening is enclosed by the plane/ Line of sight LS defined by the frame.

The width and/or height of the air gap 7 defined by the inwardly facing surfaces 29 of the sash walls 8a2 of the sash 2 which faces and encloses the air gap 7 (See plane P3) is larger than the width and/or height of the frame opening defined by the fixation frame 3, which is enclosed by the line of sight LS defined by the frame.

In order to visually hide the frame 3 and/or the sash parts 2 (when seen from the exterior), a masking 40 may be provided by means of a coating, .g. a ceramics coating, a paint, a foil or the like. This may be arranged to mask and cover the frame 3 and/or a part of the sash 2. The masking 40 may be arranged proximate the weather shield, e.g. at or opposite to one or both of the exterior surfaces 6a, 6b.

As can be seen from fig. 2b, the sash 2 can be moved from the closed sash position POS1 to the open sash position POS2 and vice versa while the weather shield is closed. This may in embodiments of the present disclosure provide an opening of the window where a part of the insulated glass unit moves through the exterior frame plane P 1.

The opening and closing may be provided manually by hand (or stick for interacting with a locking mechanism of the window for locking and unlocking the sash when in the closed position POS1). Alternatively, an actuator such as a linear actuator. E.g. a spindle or chain actuator may e arranged in the window (not illustrated) and operate the window between the opening and closing position based on wired or wireless command signals (e.g. electromagnetic control signals) from a remote controller or the like.

In fig. 2c, the locking mechanism(s) are released, and the weather shield 7 is arranged in the open weather shield position POS4. Hence, access to the air gap 7 is granted from the outside of the window in order to e.g. clean the major surfaces 6a, 4b.

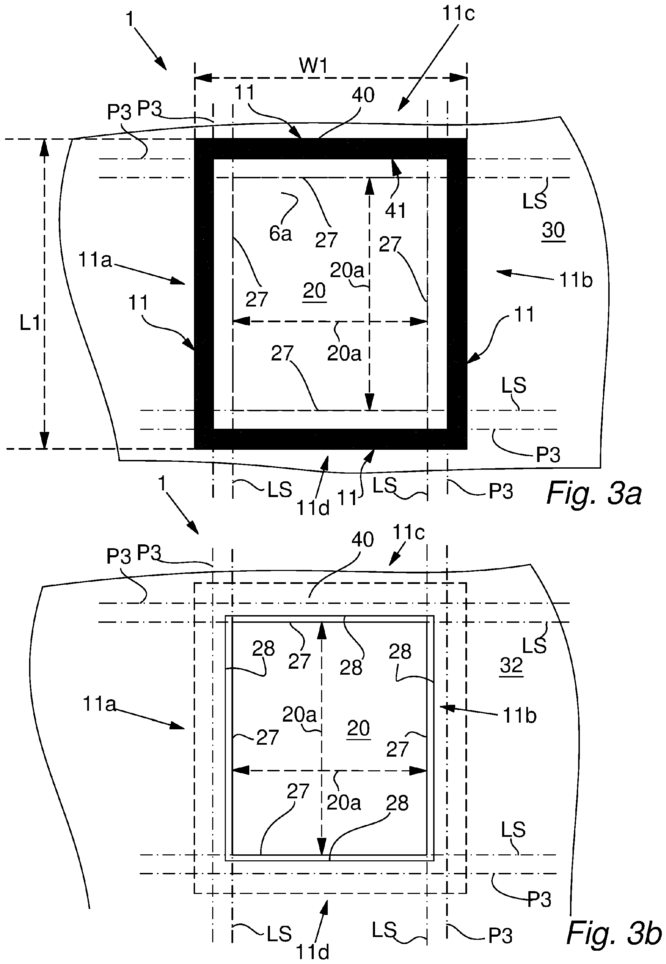

Fig. 3a illustrates the roof window according to embodiment of the present disclosure, where the roof window 1 is installed in a roofing 30 of a roof structure. The window is seen with a view perpendicular to the plane P1 (see fig. 2a-2c) and the weather shield and the sash are both in the closed positions POS1, POS3. For simplicity, the gaskets 23 and other parts are not illustrated in fig. 3a.

A masking device or coating or other covering parts, e.g. arranged at the upper surface (4b) of the insulated glass unit, such as a profile may be arranged to cover/visually hide the sash frame parts 31 when seen from the exterior of the window

As can be seen, the masking 40 hides a part of the frame and sash and is arranged around the periphery of the window 1. The lines of sight LS providing the minimum frame opening by means of the frame edges 27 of the overlapping lower parts 31 of the fixation frame 3 that overlaps the insulated glass unit at the interior surface 4a may as illustrated in principle be visible, as the inner periphery 41 of the masking 40 (and the sash walls 8a2 - see figs 2a-2c) may define an opening that is larger than the minimum frame opening defined/enclosed by the edges 27. Hence, in accordance with embodiments of the present disclosure, the sash may define an opening for a view through the insulated glass unit 4 that is larger than the minimum frame opening size, and hence the view through the panes of the insulated lass unit 4 may be restricted by the frame 3 (due to the overlapping part) rather than by the sash 2.

Fig. 3b illustrates a roof window 1 according to embodiments of the present disclosure, installed in the roof of a building. Here, it can be seen that the inner finishing drywall 28 may be arranged opposite to the overlapping part 31 of the frame, preferably between the line of sight LS and the plane P3 as illustrated. Hence, a large part of the frame and sash, and in some cases even parts of the insulated glazing 4, may be overlapped by the interior wall structure of the building. 32 are the inner ceiling/wall sheets providing the ceiling or inclining wall of the building interior.

Ref. 20a is the minimum frame opening (length and width respectively of the minimum frame opening) provided by the fixation frame

In one or more embodiments of the present disclosure, the length/height L1 and/or the width W1 of the weather shield 6 are both larger than the length and/or width of the sash opening provided between the inner wall surfaces 29 (not illustrated in figs 3a-3b)of the sash which encloses the air gap 7.

In one or more embodiments of the present disclosure, the outer perimeter of the weather shield itself, defined by the outer edges of the weather shield, is substantially equal to or larger than the maximum outer perimeter described by the sash.

At least 80% such as at least 90%, for example at least 95%, such as at least 99% of the entire outer major surface 6b of the weather shield may be exposed and visible.

In one or more aspects of the present disclosure, the weather shield has a length L1 and width W1 providing that an exposed outer surface 6b area of the weather shield 6 which is at least 90%, such as at least 95%, such as at least 99% of the area described by the outer side periphery 11, 11a-11d of the roof window 1.

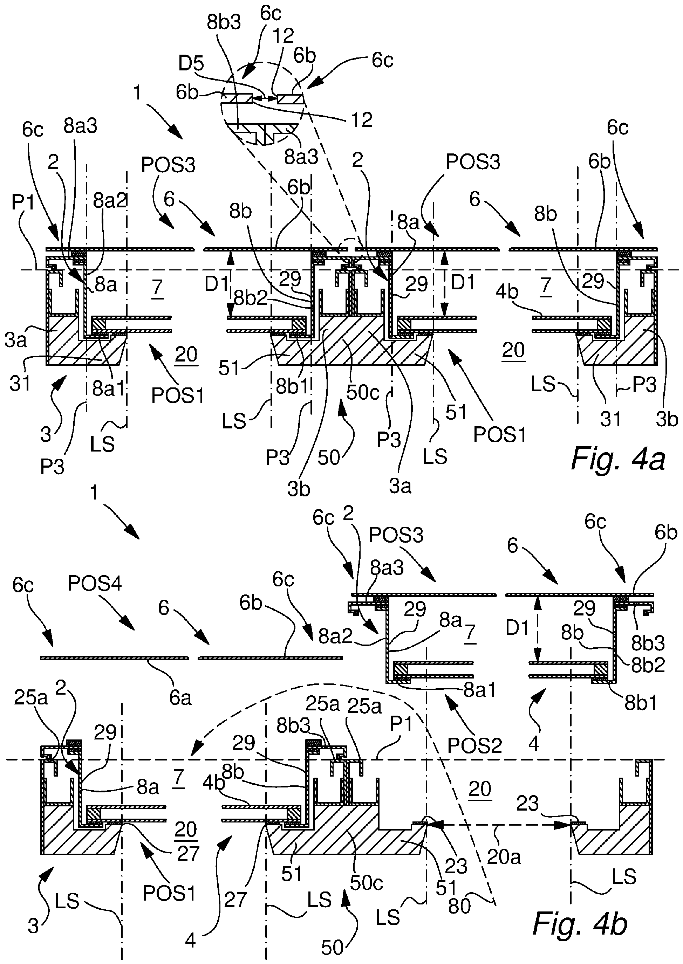

Figs. 4a-4b illustrates cross sectional views trough a roof window 1 according to further embodiments of the present disclosure. For the sake of simplicity, several of the reference numbers have been omitted from these figures. The roof window 1 here comprises a first and a second of sash arranged in the same fixation frame 3. The sash constitution is substantially similar to the embodiments showing in figs. 2a-2c. However, the fixation frame 3 comprises a shared elongated frame part 50 which overlaps an elongated right sash member 8b of a first of the sashes and moreover overlap an elongated left sash member 8a of the other sash, at least when the sashes are both placed in the closed sash position. The shared elongated frame part 50 extends in a longitudinal direction which is substantially parallel to longitudinal directions in which the overlapped right and left sash members 8a, 8b extends.

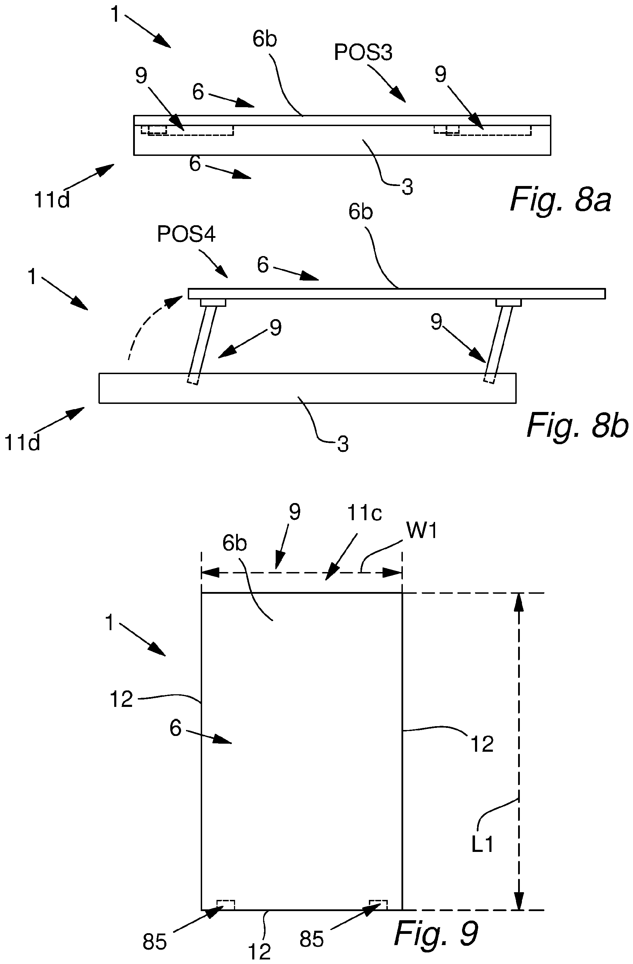

Each of the first and second sashes comprises an insulated glass unit 4 and an outer weather shield 6 connected to the respective sash so as to move together with the respective sash 2 and the insulated glass unit 4 when the respective sash 2 is moved between the closed sash position POS1 and the open sash position POS2 as previously explained. Each weather shield 6 is movably connected to the respective sash 2 by means of a further hinge arrangement 9 allowing the respective weather shield 6 to be moved relative to the sash 2 and the insulated glass unit 4 between the closed weather shield position POS3 and the open weather shield position POS4 as previously explained. However, in fig. 9, the further hinge 9 is not illustrated in figs. 4a-4b. In fig. 4a-4b, the sashes and the weather shields may be top hinged and may be configured to pivot outwards away from the interior of the building, see also figs 6a-6b.

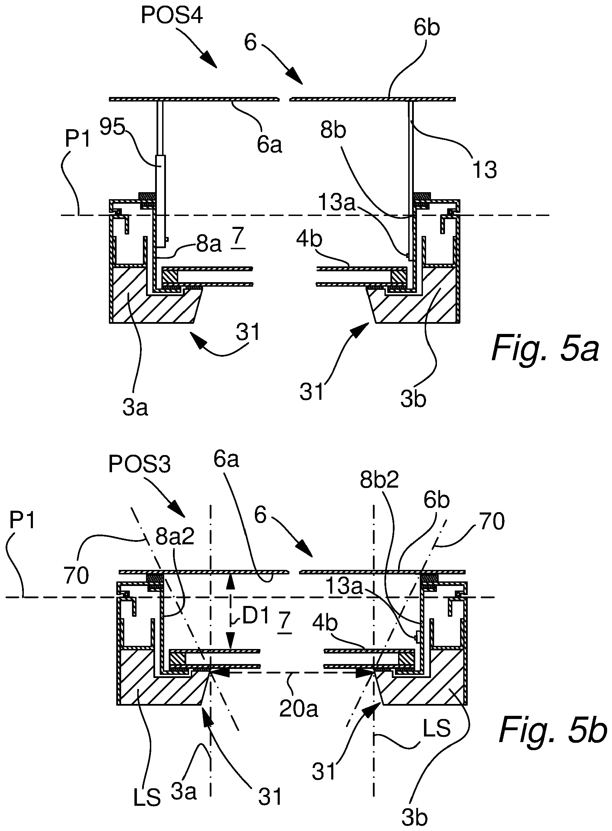

In one or more embodiments of the present disclosure, the sash walls 8a, 8b of the side parts (and possibly also the bottom part) of the sash 2 may provide a Z shape by means the sash wall members 8a1, 8a2, 8a3. See e.g. fig. 2a-2c and 4a-4b. The Z shapes may be inverted for the right and left side of the sash, see e.g. fig. 5a-5b.

Both of the first and second sashes, when in the closed sash positions POS1, are configured to support against a shared elongated frame part 50 of the fixation frame 3. It is naturally understood as that one or more resilient air seal/gasket 23 as previously explained (see e.g. figs 2a-2c), may be provided on the sash, frame part 50 and/or insulated glass unit between the shared elongated frame part and the respective sash or/or insulated glass unit.

This supporting by the sash on the shared frame part 50 may comprise one or more of
- the inner surface 4a of the insulated glass unit 4 supporting on the shared frame part, such as the overlapping part 51 (e.g. with a gasket 23 between surface 4a and frame part 51 there between),
- A wall part of the sash 8a, 8b, such as a part 8b1/8a1 of the insulated glass supporting on the shared frame part, such as the overlapping part 51 (e.g. with a gasket 23 between the wall part and the and frame part 51
- The overlapping part 6c of the weather shield 6 (and/or a sash wall profile attached thereto) supporting on a part of, or a part connected to, the centre part 50c.

It is generally to be understood that the above may apply both for the shared frame part, but one or more of the above may also (or alternatively) be provided at the sides top/and/or bottom of the fixation frame. For example, in the figures 2a-2c and 4a.4c, the sash supports on the fixation frame at two locations comprising a first location beneath the overlapping part of the weather shield (e.g. by means of the gasket 26), and beneath the insulated glass unit where the sash 2 supports on the fixation frame 3 by having the insulated glass unit 4 surface 4a supporting on the overlapping parts 31, 51, e.g. by means of the gasket 23.

In figure 4a-4c, the sash is configured to support on a part of the centre part 50c of shared frame part 50 by a sash wall part 8a3 supporting on a frame lip/wall 25a of the centre part 50c. This sash wall part 8a3 extends in over the centre part 50c below the overlapping part 6c of the weather shield and is hence placed between the overlapping part 6c and the centre part.

As can be seen from figs. 2a-2c and 4a-4b, the wall 8a3 may comprise a bended wall part comprising the end edge of the wall 8a3, and the gasket 26 may be connected thereto as illustrated in e.g. figs. 2a-2c. This bended part 8a3 may in further embodiments be omitted and the wall 8a3 may hence be substantially straight. It is generally understood that the gasket 26 may be fixed to either a sash profile wall, the weather shield 6 or the fixation frame wall 25a.

It is generally understood that the sashes may e.g. be configured to support against the shared elongated frame part 50 of the fixation frame by providing that a sash profile(s) 8a, 8b, e.g. the parts 8a1, 8b 1 support against the shared elongated frame part (not illustrated), and/or by providing that a major surface 4a of the insulated glass unit support against the shared elongated frame part. As illustrated in the example of figs. 4a-4b, the sash may be configured to support against the shared elongated frame part 50 of the fixation frame by providing that the interior major surface 4a of the insulated glass unit supports against the shared elongated frame part 50.

The shared elongated frame part 50 is connected to top and bottom members of the frame (not illustrated), and overlaps an elongated right sash member 8b of a first of the sashes (in this embodiment the sash to the left) and moreover overlaps an elongated left sash member 8a of the other sash, at least when the sashes 2 are both placed in the closed sash position POS1.

The shared elongated frame part 50 extends in a longitudinal direction which is substantially parallel to longitudinal directions in which the overlapped opposing right and left sash members 8a, 8b extends in the closed position.

In figs. 4a-4b, the shared elongated frame part 50 overlaps and visually covers a part of the interior major surface 4a of the insulated glass unit 4 when the sashes 2 are in the closed sash position. Hence when opening the sashes, more of the insulated glass units may be exposed.

The shared elongated frame part 50 extends through two parallel planes P3 that are defined by oppositely directed surfaces 29 of sash walls of the right and left sash members 8a, 8b. These oppositely directed surfaces 29 faces and encloses a part of the air gap 7 between the insulated glass unit 4 and the weather shied 6 of the respective sashes.

Hence, the elongated frame part 50 comprises overlapping parts 51 that overlaps each their respective air gap 7. Moreover, the shared frame part 50 comprises a centre part 50c carrying/supporting and/or comprising right and left frame parts of the fixation frame for interacting with right and left parts of the sashes 2. The centre part 50c extends between the air gaps 7 and walls 8a, 8b of the sashes when the sashes are in the closed position and may at the top surface define or abut a part of the exterior frame plane P1. At the top, the centre part 50c may comprise or be configured to interact with water and/or air seals/gaskets 26 to assure water and/or air tightness when the sash is in the closed position.

The sashes 2 comprises parts that each overlaps the upper surfaces of the centre part 50c of the shared frame part 50, and the same does the weather shield 6. Thereby, a low distance D5 between opposing edges 12 of the weather shield may be obtained. The distance D5 may preferably be below 10 cm, such as below 5 cm, e.g. below 3 cm and is determined perpendicular to the edge 12 surfaces.

The shared elongated frame part 50 extends in a longitudinal direction which is substantially parallel to longitudinal directions in which the overlapped right and left sash members 8a, 8b extends. The shared elongated frame part 50 may be considered a framework bar that extends, e.g. in approx. the middle of the fixation frame parallel to the side parts of the fixation frame and extending between the top and bottom parts of the fixation frame.

A drain channel (not illustrated) may in embodiments of the present disclosure be arranged underneath the space between the edges 12 in order to guide water away from the window 1. This drain channel may be provided by an U-shaped profile or the like.

As can be seen in fig. 4a, both sashes 2 and weather shields 6 are in the close positions POS1, POS3.

In fig. 4b however, one of the sashes is in closed position POS1 whereas the other is in the open position POS2. The weather shield 6 of the sash that is in the closed sash position POS1 is opened to the open weather shield position POS4, and thereby, access to the air gap 7 is granted through the frame opening at the sash that is in the open position POS2, see arrow 80. Hence, the major surfaces 4b, 6a may be cleaned and/or equipment (not illustrated) in the air gap 7 may be accessed. Such equipment may e.g. comprise a blind such as a roller blind or a venetian blind, it may comprise electrical actuators or batteries for operating the blind, it may comprise photovoltaic panels and/or the like.

Figs. 5a-5b illustrates a cross sectional view of a roof window according to embodiments of the present disclosure. Here, the window 1 comprises a holding arrangement 13 that is configured to maintain the weather shield 6 in the open weather shield position POS4 (see fig. 5a) until a user manipulates the holding arrangement 13 and/or the weather shield 6 in order to move the weather shield back to the closed weather shield position POS3. In fig. 5a, the holding arrangement 13 comprises a rod that is configured to be arranged to a holding position by a human user. This rod may be pivotally connected 13a to the sash, e.g. inside the air gap 7.

In embodiments of the present disclosure, (not illustrated) a lifting mechanism 95 may be provided. For example, the lifting mechanism 95 may comprise a linear gas actuator that may on it's own motion also ((in further embodiments) hold the weather shield in the open position POS4, and hence the lifting mechanism may also provide the holding mechanism 13 (not illustrated in fig. 5a-5b). This actuator may be of a piston-cylinder constitution. In still further embodiments of the present disclosure, the holding arrangement 13 and/or the lifting mechanism 95 may comprise an electrically powered linear actuator such as a chain actuator comprising a push-pull chain.

The holding arrangement 13 and/or the lifting arrangement 95 may be connected to the weather shield 6 in both open or closed position POS4, POS3, or only in the open position.

The lifting mechanism 95 is connected to the sash 2 and the weather shield 6, and the lifting mechanism 95 is configured to induce a lifting force on the weather shield in order to move (or help to move) the weather shield from the closed position to the open position POS4.

If the weather shield 6 is rather heavy, it may be preferred that the holding arrangement comprises the lifting mechanism 95 such as a linear gas actuator or the like that is connected to the weather shield also in the closed position, and which may help with a lifting movement of the weather shield 6 towards the open position.

It is understood that the holding arrangement 13 may comprise/provide the lifting mechanism or vice versa, but in other embodiments, the lifting mechanism may be separate to the holding arrangement as illustrated in fig. 5a. In that case, a linear actuator may be provided as a lifting arrangement, and a separate rod 13 for holding the weather shield in position POS4 may be provided. The lifting mechanism is not illustrated in fig. 5b.

Additionally, it is understood that the lifting mechanism 95 may not necessarily be set to carry the entire weight of the weather shield 6. Instead, the movement from POS3 to POS4 may be provided by a combination of a user providing a lifting force, and the lifting force induced by the lifting mechanism 95.

In other embodiments however, the lifting mechanism 95 may be configured for lifting the entire weight of the weather shield 6 acting on the lifting mechanism and hence be able to lift the weather shield 6 from POS3 to POS4 without a human user needing to providing a lifting force.

It is generally understood that the holding arrangement 13 (and/or the lifting arrangement), or certain parts thereof, in embodiments of the present disclosure may be arranged closer to the insulated glass unit and the lower part 31 of the frame when it is maintained in a non-holding position inside the air gap 7 and the weather shield is closed POS3. Here it may be kept close to the inner wall of the sash facing the air gap, thereby substantially hiding the holding arrangement at least when seen from the interior of the building. This can be seen in fig. 5b where "view planes" 70 are envisaged (the angle of these planes 70 may though change dependent on how close one is to the roof window).

The lifting mechanism 95 and/or the holding mechanism 13 may in further embodiments be arranged at the exterior side of the wall 8a and/or 8b, and provide a lifting and/or holding function from this position. Hence, it is understood that the mechanism(s) 13, 95 may not necessarily be arranged inside the air gap 7. In that case, cut-outs, recesses or the like may be provided in the sash 2 in order for the mechanism(s) 13, 95 to be able to lift and/or hold the weather shield 6 away from the sash in the open weather shield position POS4. Suitable gaskets and/or the like may here be applied if found advantageous to assure water and/or air tightness when the weather shield 6is in the closed position POS3.

It is further understood that in embodiments of the present disclosure, a pre-tensioned spring arrangement (not illustrated) may be configured to carry a part of the weight of the weather shield 6 when it is opened towards the weather shield position POS4, and e.g. also in order to provide that the user should not carry the entire weight of the weather shield when moving it towards the open and closed weather shield positions POS3, POS4. This spring arrangement may be adjustable to adjust the spring force acting on the weather shield dependent on the roof pitch angle. The spring arrangement may hence provide the mentioned lifting mechanism 95.

The view planes 70 of fig 5b moreover illustrates embodiments of the present disclosure where the roof window 1 may allow an increased amount of sunlight to pass through the weather shield 6 and the insulated glass unit 4 (the same applies for the embodiments shown in figs 2a-5a). This is provided by that the aperture for allowing the sunlight pass through the weather shield 6 may be larger than the aperture of the lower part of the frame 3, which is provided between the covering parts 31 of the frame that may provide the minimum frame opening 20a of the window through which sunlight can pass through the window. This is partly achieved by that the frame 3 comprises a lower minimum frame opening between the frame parts 31, and a larger upper frame opening at/near the plane P1. The distance between the sash walls 8a2, 8b2 facing the enclosed air gap 7 is hence larger than the distance between the opposing edges 27 of the frame parts 31 defining/enclosing the minimum lower frame opening 20a.

Figs. 6a-6c illustrates schematically a cross sectional view of the top part 11c a top hung roof window 1 according to embodiments of the present disclosure. Certain figure references are omitted to keep simplicity of the figures. Both the sash 2 and the weather shield are here top hinged, and hence the sash is connected at the top part of the sash to the fixation frame 3 by means of the first hinge connection 5, whereas the weather shield is hinged to the sash by means of the further hinge arrangement 9.

Both the hinges in fig. 6a and 6b are pivot hinges, and comprises (or provides) a rotation axis around which the weather shield and sash rotates between the positions POS1-POS2 and POS3-POS4 respectively. The weather shield 6 rotates together with the sash 4 around the rotation axis or axes provided by the first hinge arrangement dependent on the constitution of the first hinge arrangement.

The first hinge arrangement 5 comprises a fixed part 5a connected to the fixation frame 3 by means of fixation arrangement such as an adhesive and/or mechanical fasteners such as pop rivets, screws, snap connections and/or the like.

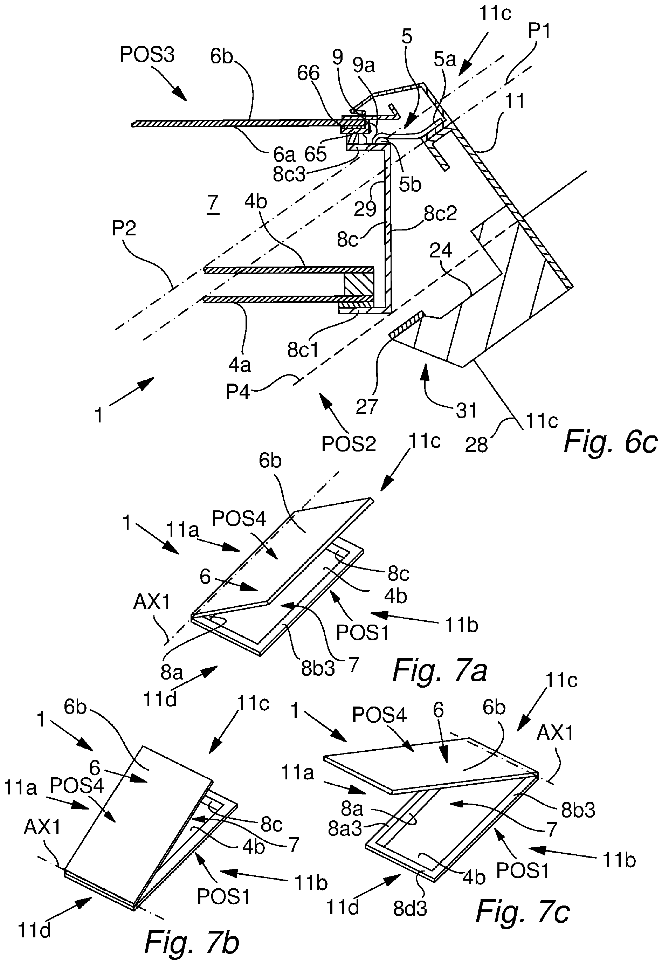

The first hinge arrangement 5 moreover comprises a second part 5b fixed to the sash by means of a fixation arrangement such as an adhesive and/or mechanical fasteners such as pop rivets, screws, snap connections, extruded profile connections and/or the like. The second part 5b may in embodiments of the present disclosure be fixed to the upper sash wall 8c directly or indirectly, such as to an upper sash part 8c3 extending along, such as substantially parallel to, the outer surface 4b of the insulated glass unit 4. The upper sash wall 8c may enclose a part of the air gap 7. The first and second parts 5a, 5b are movably interconnected to allow that the sash can open outwards from POS1 to POS2 and vice versa, see fig. 6c.

The further hinge arrangement 9 may as illustrated comprise a sash fixation part 9a that may be connected directly or indirectly to the sash wall 8c, e.g. the wall 8c3, by means of an adhesive and/or mechanical fastening means such as pop rivets, screws, snap connections and/or the like. The other part of the further hinge connection may be fixed to a weather shield connection piece 65 that may be e.g. adhering to the weather shield by means of an adhesive 66 such as a structural adhesive, e.g. a silicone adhesive. The adhesive 66 thereby fixates the piece 65 to the weather shield 6 and thereby the weather shield is connected to the upper part 8c of the sash through the further hinge 9.

In fig. 6a-6c, the hinge parts are connected so to say at or on the sash 2, (in the present example on the part 8c3), and the fixed part 5a of the first hinge arrangement 5 extends from the fixation frame 5 to the sash 2. In other embodiments, the part of the hinge 5 connecting the sash 2 to the frame 3 may be movable, and the hinge parts 5a, 5b may be connected at/on the frame 3 instead.

As mentioned previously, the rotation axes of/provided by the hinges 5, 9 may be parallel. Even, in some embodiments of the present disclosure, the rotation axes may be coinciding.

In certain embodiments of the present disclosure (not illustrated) the hinges 5, 9 may share a hinge part that is fixed to the sash so that this part both provides or comprises the second part 5b of the first hinge arrangement and the sash fixation part 9a of the further hinge arrangement 9.

One or both of the first and/or further hinges 5, 9 may in embodiments of the present disclosure be provided by means of an extruded hinge arrangement, such as a metal hinge, e.g. an aluminium hinge arrangement to which the sash and/or weather shield is attached by mechanical fasteners and/or an adhesive.

Figs. 6a-6c moreover illustrates a further embodiment of the present disclosure, where it can be seen that the fixation frame 3 extends into and below the outer plane defined by the roofing 30. As can be seen, the insulated glass unit may extend at least partly below the plane P4 that is defined by the outermost support surface(s) of the roof structure, such as the outermost surface of roof rafters (not illustrated) of the roof structure or alternatively outwardly facing surfaces of roof battens (not illustrated) of the roof structure of the building .

The window 1 may in embodiments of the present disclosure be configured to be installed in one or more predefined positions that provides various predefined installation depths of the roof window. These predefined positions may be determined by enclosed installation hardware such as brackets or the like that is configured to be attached to the roof window frame 3 and based on the orientation or constitution of the hardware, the window may be installed in different heights with respect to the roof structure such as roof rafters of the roof structure or alternatively the roof battens (not illustrated). Additionally, or alternatively, the predefined positions may be defined by one or more different predefined grooves or installation holes or elevations in the fixation frame (not illustrated) for receiving or interacting with an installation hardware, e.g. an enclosed installation hardware.

In at least one of the predefined positions at least the interior surface 4a, and possibly also the exterior surface 4b may be configured to be located below the plane P4 defined by the installation hardware support surface.

The roofing of the roof structure is arranged with the afore mentioned roof pitch *(an)* that is preferably larger than 17°, such as larger than 25°, for example larger than 35° compared to horizontal. For example, the roof pitch may be between 17° and 90°, such as between 17° and 85°.

One or both of the rotation axes of the sash 2 and the weather shield 6 are preferably placed above the plane defined by the interior major surface 4b of the insulated glass unit.

As can be seen from figs. 6a-6c, the sash wall 8c of/at the top part of the sash 2 may provide a C or U shape (by means of the wall members 8c1, 8c2, 8c3) whereas the sash walls 8a, 8b at the side may provide a Z shape (not illustrated in fig. 6a-6c) as previously described (see also e.g. figs 2a-2c).

The fixation frame 3 comprises a cover plate member 75 providing a top end cladding device 75 that is stationary and extends in over and thus overlaps a top part 76 of the weather shield. The overlapped top part 76 of the weather shield is in the illustrated embodiments of figs. 6a-6c an elongated plate shaped top part that is attached to the exterior weather shield surface 6b. However, in other embodiments of the present disclosure, the plate shaped top part may be omitted and merely replaced with a top part of the major surface 6b itself which may then be overlapped by the top cladding device 75.

The overlapped top part 76 may also in some embodiments of the present disclosure comprise a part of the weather shield connection piece 65 or vice versa.

In figs 6a-6c, the top cladding 75 and the overlapped top part 76 both comprises overlapping bended lips 75a, 76a that overlaps when the sash and the weather shield are in the closed positions, see fig. 6a. The stationary lip 75a extends with an angle towards the weather shield and the lip 76a faces the inner surface of the lip 75a when the sash and weather shield are in a closed position.

It is generally understood that a flashing system (not illustrated) may be attached to the fixation frame, or the fixation frame 3 may comprise such a flashing system for water tightness between the fixation frame and the roof structure. A part of the roofing may be arranged to overlap the flashing system.

The first hinge arrangement 5 comprises/provides an axis of rotation AX2 for the sash 2 around which the sash is configured to rotate between the open sash position POS1 and the closed sash position POS2. This axis of rotation AX2 is configured to be coinciding with a rotation plane P2 that is located opposite and parallel to the outwardly facing surface 4b of the insulated glass unit 4 when the sash 2 is in the closed sash position. The rotation plane P2 is also or alternatively parallel to the exterior frame plane P1.

The plane P1 may in embodiments of the present disclosure be placed between the surface 4b and the rotation plane P2 as illustrate din fig. 6a. In other embodiments, the rotation plane P2 may be arranged between the exterior frame plane P1 and the exterior major surface 4b of the insulated glass unit. the planes P1, P2 are parallel to each other

The distance D6 between the rotation plane P2 and an exterior frame plane P1 defined by the outermost surfaces of the fixation frame (3) which extends across and over the frame opening provided by the fixation frame may in embodiments of the present disclosure be smaller/shorter than the distance D7 between the outwardly facing surface (4b) of the insulated glass unit and the rotation plane P2. These distances D6, D7 are determined perpendicular to the planes P2, P1. when the sash is in the closed position.

Fig. 7a-7c illustrates schematically perspective views of roof windows 1 according to embodiments of the present disclosure, where the weather shield 6 is hinged at different positions and arranged in the open weather shield position POS so as to provide access to the air gap/air space 7. In all the examples of figs 7a-7c, the sash is maintained in the closed sash position POS1.

In fig. 7a, the weather shield 6 is hinged at the side of the roof window 1, in the present example, the weather shield 6 is left hinged and pivots around the rotation axis AX1, but it may also be hinged at the right side. Fig. 7b illustrates an embodiment of the present disclosure where the weather shield 6 is hinged at the bottom part 7b of the window 1, and in fig. 7c, the weather shield is top hinged, see also fig. 6a-6c.

In all of the examples illustrated in figs 7a-7c, the weather shield is pivot hinged and rotates around the same rotation axis (which may though be displaced during movement between POS3 and POS4 and vice versa in some embodiments).

As illustrated in e.g. figs. 2a-2c, 6a-6b and 7a-7c, the outer weather shield may in the open weather shield position POS4 be configured to be arranged with an angle, such as at least an acute angle, to the outwardly facing major surface 4b of the insulated glass unit 4.

In still further embodiments of the present disclosure (not illustrated) the weather shield 6 may instead be arranged on a rail arrangement by means of a hinge system, and displaced along the rail(s) between the positions POS3 and POS4.

In still further embodiments, the further hinge arrangement 9 may comprise several hinges and connection pieces that together provides a movement of the weather shield away from the plane P1 (see e.g. plane P1 in figs 2a-2c) while kept substantially parallel to the plane P1. See e.g. figs 8a-8b. However, in also these embodiments, one or more of the hinge arrangements 9 may be configured to provide a pivoting of the weather shield so that it is not parallel with the frame in open position POS4

Fig. 9 illustrates schematically an embodiment of the present disclosure where the window 1 (in this case with a top hinged 9 weather shield 6) comprises a locking arrangement comprising locking mechanisms 85 for locking the outer weather shield in the closed weather shield position POS3.

When the sash of the window 1 is in the open and closed positions POS1 POS2 (see e.g. figs 2a-2c), and during normal usage of the window, the weather shield is in the closed weather shield position POS3 and preferably held there by means of one or more releasable locking mechanisms 85. This may e.g. comprise locking mechanisms arranged at the corner areas of the weather shield as illustrated in fig. 9, but the locking mechanism(s) may also be arranged at other relevant locations Not illustrated). For example, the locking mechanisms may be arranged at/opposite to a centre part of one or more edges 12 of the weather shield and/or arranged about 1/3 or ¼ of the length of the respective edge from a corner of the weather shield 6.

In embodiments of the present disclosure, the locking mechanisms 12 for holding the weather shield in the position POS3 may be visually hidden and not extend over the outer/exterior surface 6b of the weather shield. Instead, the locking mechanisms may be integrated in the sash 2, and e.g. be accessible from one or more of the sides 11 of the window. Hence e.g. one or more of the parts (see e.g. ref. 8a1, 8a2 of the previously described figures) of the sash may comprise or be attached to a first locking part, and a second locking part may be attached or connected to an interior part pf the weather shield below the surface 6a. The first and second locking parts may hence interact and shift between a locking position and unlocking position when manipulated by a user.

The locking mechanism(s) may hold the weather shield 6 in abutment with the gasket 10 (see previously described figures) and thereby assure that the weather shield compress/deflect the gasket 10 in the closed position POS3 to provide an improved water tightness.

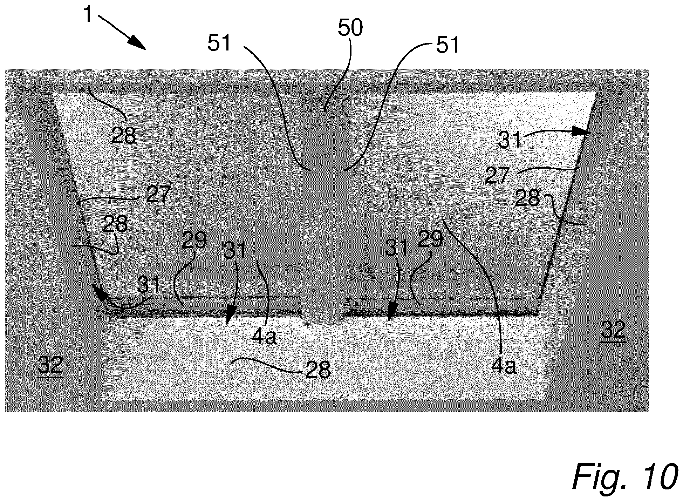

Fig. 10 illustrates a picture of a prototype of a roof window 1 as illustrated in figs. 4a-4b, which is installed in a roof structure.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure, provided that they fall within the scope of the appended claims. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description, but is defined by the claims.

## Claims

1. A roof window (1) for installation in a roof structure of a building, wherein the roof window comprises a sash (2) and a fixation frame (3), wherein the sash (2) is connected to the fixation frame (3) by means of a first hinge arrangement (5) allowing the sash (2) to be moved relative to the fixation frame (3) between a closed sash position (POS1) and an open sash position (POS2),
wherein the sash (2) comprises side members (8a, 8b), a top member (8c) and a bottom member which together encircles a sash opening, and wherein an insulated glass unit (4) is installed in and connected to the sash (2), wherein the insulated glass unit comprises multiple glass sheets and a sealed inert gas or vacuum in an insulating space (14) between the glass sheets, wherein the insulated glass unit (4) comprises an inwardly facing major surface (4a) for facing the interior of the building and an outwardly facing major surface (4b) for facing away from interior of the building,
wherein an outer weather shield (6) is connected to the sash (2), wherein the outer weather shield (6) is transparent to at least visible light and comprises an interior major surface (6a) and an exterior major surface (6b), wherein the outer weather shield (6) is configured to cover the sash opening and wherein an air gap (7) is provided between the interior major surface (6a) of the weather shield (6) and the outwardly facing major surface (4b) of the insulated glass unit (4),
wherein the outer weather shield (6) is connected to the sash (2) so as to move together with the sash (2) and the insulated glass unit (4) when the sash (2) is moved between the closed sash position (POS1) and the open sash position (POS2),
wherein the weather shield (6) is further movably connected to the sash (2) by means of a further hinge arrangement (9) allowing the weather shield (6) to be moved relative to the sash (2) and the insulated glass unit (4) between a closed weather shield position (POS3) and an open weather shield position (POS4),
wherein the exterior of the fixation frame defines an exterior frame plane (P1) defined by the outermost surfaces of the fixation frame, and wherein the exterior frame plane (P1) extends across and over the frame opening (20) which is encircled by frame members (3a-3c) of the frame, **characterized in that** at least a part of the insulated glass unit (4) is configured to move from a position above the exterior frame plane (P1) and into the frame opening (20) when the sash is moved from the open (POS2) to the closed (POS1) sash position, so that the outwardly facing major surface (4b) of the insulated glass unit (4) is placed in the frame opening (20) below the exterior frame plane (P1) with a distance (D2) to the exterior frame plane (P1) when the sash is in the closed sash position.

2. A roof window (1) according to claim 1, wherein the distance (D1) between the interior major surface (6a) of the weather shield (6) and the outwardly facing major surface (4b) of the insulated glass unit (4), when the weather shield (6) is in the closed weather shield position (POS3), is at least 3 cm, such as at least 5 cm, such as at least 10 cm, wherein said distance (D1) is defined perpendicular to one or both major surfaces (4b, 6a).

3. A roof window (1) according to any of the preceding claims, wherein the first hinge arrangement (5) and further hinge arrangement (9) are arranged at the top part (1 1c) of the window.

4. A roof window (1) according to any of the preceding claims, wherein the weather shield (6) in the closed weather shield position (POS3) is arranged substantially parallel to the outwardly facing major surface (4b) of the insulated glass unit (4).

5. A roof window (1) according to any of the preceding claims, wherein the outer weather shield (6) in the open weather shield position (POS4) is configured to be arranged with an angle, such as at least an acute angle, to the outwardly facing major surface (4b) of the insulated glass unit (4).

6. A roof window (1) according to any of the preceding claims, wherein the roof window (1) is configured to be installed in a roof structure with a roof arranged with a roof pitch which is larger than 17°, such as larger than 25°, for example larger than 35° relative to horizontal.

7. A roof window (1) according to any of the preceding claims, wherein the weather shield (6) overlaps and covers the sash (2) at two or more of the top, bottom and sides of the sash (2), and wherein the exterior major surface (6b) of the weather shield (6), at the part or parts (6c) of the weather shield (6) that overlaps the sash (2), is exposed.

8. A roof window (1) according to any of the preceding claims, wherein the fixation frame (3) comprises top, bottom and side frame members (3a, 3b, 3c, 50) defining a frame opening (20, 20a), and wherein the outer weather shield (60) overlaps at least said side frame members (3a, 3b, 50) and preferably also the bottom frame member.

9. A roof window (1) according to any of the preceding claims, wherein the outer weather shield (6) has an exposed outer surface (6b) area which is at least 90%, such as at least 95%, such as at least 99% of the area described by the outer side periphery (11a-11d) of the roof window (1).

10. A roof window (1) according to any of the preceding claims, wherein at least the width (W1) of the weather shield is substantially equal to or larger than the maximum width of the fixation frame (3).

11. A roof window (1) according to any of the preceding claims, wherein the interior (6a) and exterior (6b) major surfaces of the outer weather shield (6) are plane, and/or wherein the outer weather shield (6) comprises one or more plane sheets of glass such as one or more plane sheets of annealed or tempered glass.

12. A roof window (1) according to any of the preceding claims, wherein the roof window comprises one or more releasable locking mechanisms (85) for locking the outer weather shield in the closed weather shield position (POS3).

13. A roof window (1) according to any of the preceding claims, wherein said distance (D2) to the exterior frame plane (P1) when the sash is in the closed sash position is at least 3 cm,
such as wherein said distance (D2) to the exterior frame plane (P1) when the sash is in the closed sash position is at least 7 cm, such as at least 12 cm.

14. A roof window (1) according to any of the preceding claims, wherein the outer weather shield (6) is maintained at a position above the frame opening (20) and above the exterior frame plane (P1) when the sash (2) is in the closed sash position (POS1) and when the weather shield (6) is in the closed weather shield position (POS3), and with a distance (D3) between the interior surface (6a) of the weather shield and the exterior frame plane (P1) which is less than the distance (D2) between the outwardly facing major surface (4b) of the insulated glass unit (4) and the exterior frame plane (P1),
such as wherein said distance (D3) between the interior surface (6a) of the weather shield and the exterior frame plane (P1) is less than half, such as less than 1/4, or less than 1/8 of the distance (D2) between the outwardly facing major surface (4b) of the insulated glass unit (4) and the exterior frame plane (P1).

15. A roof window according to any of the preceding claims, wherein the roof window (1) comprises a first and a second of said sash (2) arranged in the fixation frame (3), wherein both of the first and second sashes (2) in the closed sash positions (POS1) are configured to support against a shared elongated frame part (50) of the fixation frame (3), where the shared elongated frame part (50) comprises parts that overlaps an elongated right sash member (8b) of a first of the sashes and moreover overlap an elongated left sash member (8a) of the other sash, at least when the sashes are both placed in the closed sash position (POS1), such as wherein the shared elongated frame part (50) extends in a longitudinal direction which is substantially parallel to longitudinal directions in which the overlapped right and left sash members (8a, 8b) extends.

16. A roof window according to any of the preceding claims, wherein the roof window (1) comprises a first and a second of said sash (2) arranged in the fixation frame (3), wherein each of the first and second sash comprises an insulated glass unit (4) and an outer weather shield (6) connected to the respective sash so as to move together with the respective sash (2) and the insulated glass unit (4) when the sash (2) is moved between the closed sash position (POS1) and the open sash position (POS2),
wherein each of the weather shields (6) are movably connected to the respective sash (2) by means of the further hinge arrangement (9) allowing each weather shield (6) to be moved relative to the respective sash (2) and the insulated glass unit (4) between the closed weather shield position (POS3) and the open weather shield position (POS4),
wherein both of the first and second sashes (2) in the closed sash positions (POS1) are configured to support against a shared elongated frame part (50) of the fixation frame (3),
wherein the shared elongated frame part (50) comprises parts (51) that overlaps an elongated right sash member (8b) of a first of the sashes and moreover overlap an elongated left sash member (8a) of the other sash, at least when the sashes (2) are both placed in the closed sash position (POS1), and
wherein the shared elongated frame part (50) extends in a longitudinal direction which is substantially parallel to longitudinal directions in which the overlapped right and left sash members (8a, 8b) extends.

## Patentansprüche

1. Dachfenster (1) zum Einbau in eine Dachkonstruktion eines Gebäudes, wobei das Dachfenster einen Flügel (2) und einen Befestigungsrahmen (3) umfasst, wobei der Flügel (2) mit dem Befestigungsrahmen (3) mittels einer ersten Scharnieranordnung (5) verbunden ist, die es dem Flügel (2) ermöglicht, sich relativ zu dem Befestigungsrahmen (3) zwischen einer geschlossenen Flügelposition (POS1) und einer offenen Flügelposition (POS2) zu bewegen,
wobei der Flügel (2) Seitenelemente (8a, 8b), ein oberes Element (8c) und ein unteres Element umfasst, die zusammen eine Flügelöffnung umschließen, und wobei eine Isolierglaseinheit (4) in den Flügel (2) eingebaut und mit diesem verbunden ist, wobei die Isolierglaseinheit mehrere Glasscheiben und ein abgedichtetes Inertgas oder Vakuum in einem Isolierraum (14) zwischen den Glasscheiben umfasst, wobei die Isolierglaseinheit (4) eine nach innen gerichtete Hauptfläche (4a), um zum Inneren des Gebäudes gerichtet zu sein, und eine nach außen gerichtete Hauptfläche (4b), um vom Inneren des Gebäudes weg gerichtet zu sein, umfasst,
wobei ein äußerer Wetterschutz (6) mit dem Flügel (2) verbunden ist, wobei der äußere Wetterschutz (6) mindestens für sichtbares Licht durchlässig ist und eine innere Hauptfläche (6a) und eine äußere Hauptfläche (6b) umfasst, wobei der äußere Wetterschutz (6) dazu konfiguriert ist, die Flügelöffnung abzudecken, und wobei ein Luftspalt (7) zwischen der inneren Hauptfläche (6a) des Wetterschutzes (6) und der nach außen gerichteten Hauptfläche (4b) der Isolierglaseinheit (4) bereitgestellt ist, wobei der äußere Wetterschutz (6) so mit dem Flügel (2) verbunden ist, dass er sich zusammen mit dem Flügel (2) und der Isolierglaseinheit (4) bewegt, wenn der Flügel (2) zwischen der geschlossenen Flügelposition (POS1) und der geöffneten Flügelposition (POS2) bewegt wird,
wobei der Wetterschutz (6) ferner bewegbar mit dem Flügel (2) mittels einer weiteren Scharnieranordnung (9) verbunden ist, die es dem Wetterschutz (6) ermöglicht, relativ zu dem Flügel (2) und der Isolierglaseinheit (4) zwischen einer geschlossenen Wetterschutzposition (POS3) und einer offenen Wetterschutzposition (POS4) bewegt zu werden,
wobei die Außenseite des Befestigungsrahmens eine äußere Rahmenebene (P1) definiert, die durch die äußersten Flächen des Befestigungsrahmens definiert ist, und wobei sich die äußere Rahmenebene (P1) über die Rahmenöffnung (20) hinweg und darüber hinaus erstreckt, die von Rahmenelementen (3a-3c) des Rahmens umschlossen ist, **dadurch gekennzeichnet, dass**
mindestens ein Teil der Isolierglaseinheit (4) dazu konfiguriert ist, sich von einer Position oberhalb der äußeren Rahmenebene (P1) und in die Rahmenöffnung (20) hinein zu bewegen, wenn der Flügel von der geöffneten (POS2) in die geschlossene (POS1) Flügelposition bewegt wird, so dass die nach außen gerichtete Hauptfläche (4b) der Isolierglaseinheit (4) in der Rahmenöffnung (20) unterhalb der äußeren Rahmenebene (P1) mit einem Abstand (D2) zu der äußeren Rahmenebene (P1) platziert ist, wenn sich der Flügel in der geschlossenen Flügelposition befindet.

2. Dachfenster (1) nach Anspruch 1, wobei der Abstand (D1) zwischen der inneren Hauptfläche (6a) des Wetterschutzes (6) und der nach außen gerichteten Hauptfläche (4b) der Isolierglaseinheit (4), wenn sich der Wetterschutz (6) in der geschlossenen Wetterschutzposition (POS3) befindet, mindestens 3 cm, beispielsweise mindestens 5 cm, beispielsweise mindestens 10 cm beträgt, wobei dieser Abstand (D1) senkrecht zu einer oder beiden Hauptflächen (4b, 6a) definiert ist.

3. Dachfenster (1) nach einem der vorhergehenden Ansprüche, wobei die erste Scharnieranordnung (5) und die weitere Scharnieranordnung (9) an dem oberen Teil (11c) des Fensters angeordnet sind.

4. Dachfenster (1) nach einem der vorhergehenden Ansprüche, wobei der Wetterschutz (6) in der geschlossenen Wetterschutzposition (POS3) im Wesentlichen parallel zu der nach außen gerichteten Hauptfläche (4b) der Isolierglaseinheit (4) angeordnet ist.

5. Dachfenster (1) nach einem der vorhergehenden Ansprüche, wobei der äußere Wetterschutz (6) in der geöffneten Wetterschutzposition (POS4) dazu konfiguriert ist, in einem Winkel, beispielsweise mindestens einem spitzen Winkel, zu der nach außen gerichteten Hauptfläche (4b) der Isolierglaseinheit (4) angeordnet zu sein.

6. Dachfenster (1) nach einem der vorhergehenden Ansprüche, wobei das Dachfenster (1) dazu konfiguriert ist, in eine Dachkonstruktion mit einem Dach, das mit einer Dachneigung von mehr als 17°, beispielsweise mehr als 25°, beispielsweise mehr als 35° zur Horizontalen angeordnet ist, eingebaut zu werden.

7. Dachfenster (1) nach einem der vorhergehenden Ansprüche, wobei der Wetterschutz (6) den Flügel (2) an zwei oder mehreren der Oberseite, Unterseite und Seiten des Flügels (2) überlappt und abdeckt und wobei die äußere Hauptfläche (6b) des Wetterschutzes (6) an dem oder den Teilen (6c) des Wetterschutzes (6), die den Flügel (2) überlappen, freiliegt.

8. Dachfenster (1) nach einem der vorhergehenden Ansprüche, wobei der Befestigungsrahmen (3) obere, untere und seitliche Rahmenelemente (3a, 3b, 3c, 50) umfasst, die eine Rahmenöffnung (20, 20a) definieren, und wobei der äußere Wetterschutz (60) mindestens die seitlichen Rahmenelemente (3a, 3b, 50) und vorzugsweise auch das untere Rahmenelement überlappt.

9. Dachfenster (1) nach einem der vorhergehenden Ansprüche, wobei der äußere Wetterschutz (6) eine freiliegende Außenfläche (6b) aufweist, die mindestens 90 %, beispielsweise mindestens 95 %, beispielsweise mindestens 99 % der Fläche ausmacht, die durch den äußeren Seitenrand (11a-11d) des Dachfensters (1) beschrieben wird.

10. Dachfenster (1) nach einem der vorhergehenden Ansprüche, wobei mindestens die Breite (W1) des Wetterschutzes im Wesentlichen gleich oder größer als die maximale Breite des Befestigungsrahmens (3) ist.

11. Dachfenster (1) nach einem der vorhergehenden Ansprüche, wobei die inneren (6a) und äußeren (6b) Hauptflächen des äußeren Wetterschutzes (6) eben sind und/oder wobei der äußere Wetterschutz (6) eine oder mehrere ebene Glasscheiben, wie beispielsweise eine oder mehrere ebene Scheiben aus getempertem oder gehärtetem Glas, umfasst.

12. Dachfenster (1) nach einem der vorhergehenden Ansprüche, wobei das Dachfenster einen oder mehrere lösbare Verriegelungsmechanismen (85) zum Verriegeln des äußeren Wetterschutzes in der geschlossenen Wetterschutzposition (POS3) umfasst.

13. Dachfenster (1) nach einem der vorhergehenden Ansprüche, wobei der Abstand (D2) zu der äußeren Rahmenebene (P1), wenn der Flügel sich in der geschlossenen Flügelposition befindet, mindestens 3 cm beträgt,
beispielsweise wobei der Abstand (D2) zu der äußeren Rahmenebene (P1), wenn der Flügel sich in der geschlossenen Flügelposition befindet, mindestens 7 cm, beispielsweise mindestens 12 cm, beträgt.

14. Dachfenster (1) nach einem der vorhergehenden Ansprüche, wobei der äußere Wetterschutz (6) in einer Position über der Rahmenöffnung (20) und über der äußeren Rahmenebene (P1) gehalten wird, wenn sich der Flügel (2) in der geschlossenen Flügelposition (POS1) befindet und wenn sich der Wetterschutz (6) in der geschlossenen Wetterschutzposition (POS3) befindet, und mit einem Abstand (D3) zwischen der Innenfläche (6a) des Wetterschutzes und der äußeren Rahmenebene (P1), der kleiner ist als der Abstand (D2) zwischen der nach außen gerichteten Hauptfläche (4b) der Isolierglaseinheit (4) und der äußeren Rahmenebene (P1),
beispielsweise wobei der Abstand (D3) zwischen der Innenfläche (6a) des Wetterschutzes und der äußeren Rahmenebene (P1) weniger als die Hälfte, beispielsweise weniger als 1/4 oder weniger als 1/8 des Abstands (D2) zwischen der nach außen gerichteten Hauptfläche (4b) der Isolierglaseinheit (4) und der äußeren Rahmenebene (P1) beträgt.

15. Dachfenster nach einem der vorhergehenden Ansprüche, wobei das Dachfenster (1) einen ersten und einen zweiten des Flügels (2) umfasst, die in dem Befestigungsrahmen (3) angeordnet sind, wobei sowohl der erste als auch der zweite Flügel (2) in den geschlossenen Flügelpositionen (POS1) dazu konfiguriert sind, gegen einen gemeinsamen länglichen Rahmenteil (50) des Befestigungsrahmens (3) zu stützen, wobei der gemeinsame längliche Rahmenteil (50) Teile umfasst, die ein längliches rechtes Flügelelement (8b) eines ersten der Flügel überlappen und außerdem ein längliches linkes Flügelelement (8a) des anderen Flügels überlappen, mindestens wenn die Flügel beide in der geschlossenen Flügelposition (POS1) platziert sind, beispielsweise wobei der gemeinsame längliche Rahmenteil (50) sich in einer Längsrichtung erstreckt, die im Wesentlichen parallel zu den Längsrichtungen, in denen sich die überlappten rechten und linken Flügelelemente (8a, 8b) erstrecken, ist.

16. Dachfenster nach einem der vorhergehenden Ansprüche, wobei das Dachfenster (1) einen ersten und einen zweiten des Flügels (2) umfasst, die in dem Befestigungsrahmen (3) angeordnet sind, wobei jeder des ersten und des zweiten Flügels eine Isolierglaseinheit (4) und einen äußeren Wetterschutz (6) umfasst, der mit dem jeweiligen Flügel so verbunden ist, dass er sich mit dem jeweiligen Flügel (2) und der Isolierglaseinheit (4) zusammen bewegt, wenn der Flügel (2) zwischen der geschlossenen Flügelposition (POS1) und der offenen Flügelposition (POS2) bewegt wird,
wobei jeder der Wetterschutze (6) bewegbar mit dem jeweiligen Flügel (2) mittels der weiteren Scharnieranordnung (9) verbunden ist, die es jedem Wetterschutz (6) ermöglicht, relativ zu dem jeweiligen Flügel (2) und der Isolierglaseinheit (4) zwischen der geschlossenen Wetterschutzposition (POS3) und der offenen Wetterschutzposition (POS4) bewegt zu werden,
wobei sowohl der erste als auch der zweite Flügel (2) in den geschlossenen Flügelpositionen (POS1) dazu konfiguriert sind, gegen einen gemeinsamen länglichen Rahmenteil (50) des Befestigungsrahmens (3) zu stützen,
wobei der gemeinsame längliche Rahmenteil (50) Teile (51) umfasst, die ein längliches rechtes Flügelelement (8b) eines ersten der Flügel überlappen und außerdem ein längliches linkes Flügelelement (8a) des anderen Flügels überlappen, mindestens wenn die Flügel (2) beide in der geschlossenen Flügelposition (POS1) platziert sind, und
wobei sich der gemeinsame längliche Rahmenteil (50) in einer Längsrichtung erstreckt, die im Wesentlichen parallel zu den Längsrichtungen ist, in denen sich die überlappenden rechten und linken Flügelelemente (8a, 8b) erstrecken.

## Revendications

1. Fenêtre de toit (1) destinée à être installée dans une structure de toit d'un bâtiment, dans laquelle la fenêtre de toit comprend un châssis (2) et un cadre de fixation (3), dans laquelle le châssis (2) est relié au cadre de fixation (3) au moyen d'un premier agencement de charnière (5) permettant de déplacer le châssis (2) par rapport au cadre de fixation (3) entre une position de châssis fermée (POS1) et une position de châssis ouverte (POS2),
dans laquelle le châssis (2) comprend des éléments latéraux (8a, 8b), un élément supérieur (8c) et un élément inférieur qui entourent ensemble une ouverture de châssis, et dans laquelle un vitrage isolant (4) est installé et relié au châssis (2), dans laquelle le vitrage isolant comprend plusieurs feuilles de verre et un gaz inerte scellé ou un vide dans un espace isolant (14) entre les feuilles de verre, dans laquelle le vitrage isolant (4) comprend une surface principale orientée vers l'intérieur (4a) pour faire face à l'intérieur du bâtiment et une surface principale orientée vers l'extérieur (4b) pour faire face à l'opposé de l'intérieur du bâtiment,
dans laquelle une protection extérieure contre les intempéries (6) est reliée au châssis (2), dans laquelle la protection extérieure contre les intempéries (6) est transparente au moins à la lumière visible et comprend une surface principale intérieure (6a) et une surface principale extérieure (6b), dans laquelle la protection extérieure contre les intempéries (6) est configurée pour couvrir l'ouverture du châssis et dans laquelle un espace d'air (7) est prévu entre la surface principale intérieure (6a) de la protection contre les intempéries (6) et la surface principale tournée vers l'extérieur (4b) du vitrage isolant (4),
dans laquelle la protection extérieure contre les intempéries (6) est reliée au châssis (2) de manière à se déplacer ensemble avec le châssis (2) et le vitrage isolant (4) lorsque le châssis (2) est déplacé entre la position de châssis fermée (POS1) et la position de châssis ouverte (POS2),
dans laquelle la protection contre les intempéries (6) est en outre reliée de manière mobile au châssis (2) au moyen d'un autre agencement de charnière (9) permettant à la protection contre les intempéries (6) d'être déplacée par rapport au châssis (2) et au vitrage isolant (4) entre une position fermée de protection contre les intempéries (POS3) et une position ouverte de protection contre les intempéries (POS4),
dans laquelle l'extérieur du cadre de fixation définit un plan de cadre extérieur (P1) défini par les surfaces les plus extérieures du cadre de fixation, et dans laquelle le plan de cadre extérieur (P1) s'étend à travers et au-dessus de l'ouverture de cadre (20) qui est entourée par des éléments de cadre (3a-3c) du cadre, **caractérisée en ce que**
au moins une partie du vitrage isolant (4) est configurée pour se déplacer d'une position au-dessus du plan de cadre extérieur (P1) et dans l'ouverture de cadre (20) lorsque le châssis est déplacé de la position de châssis ouverte (POS2) à la position de châssis fermée (POS1), de sorte que la surface principale orientée vers l'extérieur (4b) du vitrage isolant (4) soit placée dans l'ouverture de cadre (20) en dessous du plan de cadre extérieur (P1) avec une distance (D2) par rapport au plan de cadre extérieur (P1) lorsque le châssis est en position de châssis fermée.

2. Fenêtre de toit (1) selon la revendication 1, dans laquelle la distance (D1) entre la surface principale intérieure (6a) de la protection contre les intempéries (6) et la surface principale tournée vers l'extérieur (4b) du vitrage isolant (4), lorsque la protection contre les intempéries (6) est dans la position fermée de protection contre les intempéries (POS3), est d'au moins 3 cm, par exemple au moins 5 cm, par exemple au moins 10 cm, dans laquelle ladite distance (D1) est définie perpendiculairement à l'une ou aux deux surfaces principales (4b, 6a) .

3. Fenêtre de toit (1) selon l'une quelconque des revendications précédentes, dans laquelle le premier agencement de charnière (5) et l'autre agencement de charnière (9) sont agencés au niveau de la partie supérieure (11c) de la fenêtre.

4. Fenêtre de toit (1) selon l'une quelconque des revendications précédentes, dans laquelle la protection contre les intempéries (6) dans la position fermée de protection contre les intempéries (POS3) est agencée sensiblement parallèlement à la surface principale tournée vers l'extérieur (4b) du vitrage isolant (4).

5. Fenêtre de toit (1) selon l'une quelconque des revendications précédentes, dans laquelle la protection extérieure contre les intempéries (6) dans la position ouverte de protection contre les intempéries (POS4) est configurée pour être agencée avec un angle, par exemple au moins un angle aigu, à la surface principale tournée vers l'extérieur (4b) du vitrage isolant (4).

6. Fenêtre de toit (1) selon l'une quelconque des revendications précédentes, dans laquelle la fenêtre de toit (1) est configurée pour être installée dans une structure de toit avec un toit agencé avec une pente de toit qui est supérieure à 17°, par exemple supérieure à 25°, par exemple supérieure à 35° par rapport à l'horizontale.

7. Fenêtre de toit (1) selon l'une quelconque des revendications précédentes, dans laquelle la protection contre les intempéries (6) chevauche et recouvre le châssis (2) au niveau de deux ou plusieurs des parties supérieure, inférieure et latérales du châssis (2), et dans laquelle la surface principale extérieure (6b) de la protection contre les intempéries (6), au niveau de la ou des parties (6c) de la protection contre les intempéries (6) qui chevauche le châssis (2), est exposée.

8. Fenêtre de toit (1) selon l'une quelconque des revendications précédentes, dans laquelle le cadre de fixation (3) comprend des éléments de cadre supérieur, inférieur et latéraux (3a, 3b, 3c, 50) définissant une ouverture de cadre (20, 20a), et dans laquelle la protection extérieure contre les intempéries (60) chevauche au moins lesdits éléments de cadre latéraux (3a, 3b, 50) et de préférence également l'élément de cadre inférieur.

9. Fenêtre de toit (1) selon l'une quelconque des revendications précédentes, dans laquelle la protection extérieure contre les intempéries (6) a une surface extérieure exposée (6b) qui est d'au moins 90 %, par exemple au moins 95 %, par exemple au moins 99 % de la zone décrite par la périphérie latérale extérieure (11a-11d) de la fenêtre de toit (1).

10. Fenêtre de toit (1) selon l'une quelconque des revendications précédentes, dans laquelle au moins la largeur (W1) de la protection contre les intempéries est sensiblement égale ou supérieure à la largeur maximale du cadre de fixation (3) .

11. Fenêtre de toit (1) selon l'une quelconque des revendications précédentes, dans laquelle les surfaces principales intérieure (6a) et extérieure (6b) de la protection extérieure contre les intempéries (6) sont planes, et/ou dans laquelle la protection extérieure contre les intempéries (6) comprend une ou plusieurs feuilles de verre planes, par exemple une ou plusieurs feuilles de verre planes en verre recuit ou trempé.

12. Fenêtre de toit (1) selon l'une quelconque des revendications précédentes, dans laquelle la fenêtre de toit comprend un ou plusieurs mécanismes de verrouillage libérables (85) pour verrouiller la protection extérieure contre les intempéries dans la position fermée de protection contre les intempéries (POS3).

13. Fenêtre de toit (1) selon l'une quelconque des revendications précédentes, dans laquelle ladite distance (D2) par rapport au plan de cadre extérieur (P1) lorsque le châssis est en position de châssis fermée est d'au moins 3 cm,
par exemple dans laquelle ladite distance (D2) par rapport au plan de cadre extérieur (P1) lorsque le châssis est en position de châssis fermée est d'au moins 7 cm, par exemple au moins 12 cm.

14. Fenêtre de toit (1) selon l'une quelconque des revendications précédentes, dans laquelle la protection extérieure contre les intempéries (6) est maintenue dans une position au-dessus de l'ouverture du cadre (20) et au-dessus du plan de cadre extérieur (P1) lorsque le châssis (2) est en position de châssis fermée (POS1) et lorsque la protection contre les intempéries (6) est en position fermée de protection contre les intempéries (POS3), et avec une distance (D3) entre la surface intérieure (6a) de la protection contre les intempéries et le plan de cadre extérieur (P1) qui est inférieure à la distance (D2) entre la surface principale tournée vers l'extérieur (4b) du vitrage isolant (4) et le plan de cadre extérieur (P1),
par exemple dans laquelle ladite distance (D3) entre la surface intérieure (6a) de la protection contre les intempéries et le plan de cadre extérieur (P1) est inférieure à la moitié, par exemple inférieure à 1/4, ou inférieure à 1/8 de la distance (D2) entre la surface principale tournée vers l'extérieur (4b) du vitrage isolant (4) et le plan de cadre extérieur (P1).

15. Fenêtre de toit selon l'une quelconque des revendications précédentes, dans laquelle la fenêtre de toit (1) comprend un premier et un second desdits châssis (2) agencés dans le cadre de fixation (3), dans laquelle le premier et le second châssis (2) dans les positions de châssis fermées (POS1), sont configurés pour s'appuyer contre une partie de cadre allongée partagée (50) du cadre de fixation (3), où la partie de cadre allongée partagée (50) comprend des parties qui chevauchent un élément de châssis droit allongé (8b) d'un premier des châssis et chevauchent en outre un élément de châssis gauche allongé (8a) de l'autre châssis, au moins lorsque les châssis sont tous deux placés dans la position de châssis fermée (POS1), par exemple dans laquelle la partie de cadre allongée partagée (50) s'étend dans une direction longitudinale qui est sensiblement parallèle aux directions longitudinales dans lesquelles s'étendent les éléments de châssis droit et gauche superposés (8a, 8b).

16. Fenêtre de toit selon l'une quelconque des revendications précédentes, dans laquelle la fenêtre de toit (1) comprend un premier et un second desdits châssis (2) agencés dans le cadre de fixation (3), dans laquelle chacun des premier et second châssis comprend un vitrage isolant (4) et une protection extérieure contre les intempéries (6) reliée au châssis respectif de manière à se déplacer avec le châssis respectif (2) et le vitrage isolant (4) lorsque le châssis (2) est déplacé entre la position de châssis fermée (POS1) et la position de châssis ouverte (POS2),
dans laquelle les protections contre les intempéries (6) sont en outre reliées de manière mobile au châssis (2) respectif au moyen de l'autre agencement de charnière (9) permettant à chaque protection contre les intempéries (6) d'être déplacée par rapport au châssis (2) et au vitrage isolant (4) entre une position fermée de protection contre les intempéries (POS3) et une position ouverte de protection contre les intempéries (POS4),
dans laquelle le premier et le second châssis (2) dans les positions de châssis fermées (POS1) sont configurés pour s'appuyer contre une partie de cadre allongée partagée (50) du cadre de fixation (3),
dans laquelle la partie de cadre allongée partagée (50) comprend des parties (51) qui chevauchent un élément de châssis droit allongé (8b) d'un premier des châssis et chevauchent en outre un élément de châssis gauche allongé (8a) de l'autre châssis, au moins lorsque les châssis (2) sont tous deux placés en position de châssis fermée (POS1), et
dans laquelle la partie de cadre allongée partagée (50) s'étend dans une direction longitudinale qui est sensiblement parallèle aux directions longitudinales dans lesquelles les éléments de châssis droit et gauche superposés (8a, 8b) s'étendent.
